(19) Europäisches Patentamt
European Patent Office
Office européen des brevets

(11) **EP 2 408 130 A1**

(12) **EUROPEAN PATENT APPLICATION**
published in accordance with Art. 153(4) EPC

(43) Date of publication:
**18.01.2012 Bulletin 2012/03**

(51) Int Cl.:
***H04J 99/00*** *(2009.01)* ***H04B 7/04*** *(2006.01)*

(21) Application number: **09841475.8**

(22) Date of filing: **12.03.2009**

(86) International application number:
**PCT/JP2009/054796**

(87) International publication number:
**WO 2010/103647 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Hitachi, Ltd.**
**Chiyoda-ku**
**Tokyo 100-8280 (JP)**

(72) Inventors:
• **KUWAHARA, Mikio**
**Chiyoda-ku, Tokyo 100-8220 (JP)**
• **FUJISHIMA, Kenzaburo**
**Chiyoda-ku, Tokyo 100-8220 (JP)**

(74) Representative: **MERH-IP**
**Matias Erny Reichl Hoffmann**
**Paul-Heyse-Straße 29**
**80336 München (DE)**

(54) **MIMO RECEPTION METHOD**

(57) By performing a full MLD only when a specific condition is satisfied, it is possible to prevent QR decomposition-MLD performance degradation while suppressing increase of the necessary calculation amount. For each of the reception signal symbols, a reception channel matrix formed by N rows and N columns is subjected to the QR decomposition to obtain an upper triangular matrix (301, 302). After obtaining a reception channel matrix subjected to the QR decomposition, a partial matrix of the M-th stage is extracted to calculate metric of a replica candidate which can be selected for the partial matrix (303). The calculated metrics are ranked in the ascending order (401). The K-th replica and after having low evaluations in the ranking are excluded from the candidates in the next stage and after (403). If the largest metric obtained in the ranking of step 401 is smaller than a specific threshold value, the aforementioned step 403 is skipped and no replica candidate is selected.

FIG.4

EP 2 408 130 A1

**Description**

Technical Field

The present invention relates to a MIMO receiving method, and particularly to an MIMO receiving method particularly using QR decomposition-maximum likelihood detection (MLD) in a receiver employing multi-input multi-output (MIMO) in a radio communication. According to the invention, the performance closer to that of the MLD in which throughput is large can be realized by the QR decomposition-MLD which is an easy processing.

Background Art

In the radio communication, multi-input multi-output (MIMO) using a plurality of antennas is used. In the MIMO, respective different signals are transmitted from a plurality of transmitter antennas at the same time, and a signal combined in space is received by a plurality of receiver antennas. The received signal is decomposed in a manner of solving an equation to reproduce an original stream.
In IEEE802.16 that is one standards body, a radio system based on an OFDM has been proposed, and a system using the MIMO is defined.
In 3GPP that is another standards body, a radio system based on orthogonal frequency division multiplexing (OFDM) has been proposed as long term evolution (LTE), and a system using the MIMO is defined.
Similarly, in a CDMA system, there is a tendency to define a system related to the MIMO.
Even in standardization such as 802.16m or LTE-Advance assuming the fourth generation, the MIMO of 4x4 or more has been proposed according to a requirement, and a reduction in signal throughput and pursuit of performance are continuously required.
In a method of solving the MIMO, there has been known a minimum mean squared error (MMSE) obtaining log-likelihood ratio (LLR) after space separation has been conducted in advance. Assuming Gaussian noise, likelihood is represented by a distance between a receiving point and a replica in a code space. In general, it is conceivable that noise is, for example, thermal noise applied by a receiver during amplification or interference from another communication. A digital communication is intended to transmit information of 0 or 1 by code, in which likelihood is representative of a probability (speciousness) that 0 or 1 determined at the receiver side is assumed to be transmitted. A ratio (likelihood ratio) of a probability $P_0$ that 0 is assumed to be transmitted to a probability $P_1$ that 1 is assumed to be transmitted in which $P_1$ is a denominator can be replaced with probability information that if the likelihood ratio is larger than 1, 0 would be probably transmitted as a transmission code, or if the likelihood ratio is smaller than 1, 1 would be probably transmitted as the transmission code. In a Gaussian distribution, a probability distribution is represented by an exponential to the above distance. Accordingly, there has been known that the likelihood can be evaluated by only treatable product-sum operation with execution of logarithmic arithmetic on the likelihood. The operation result is called "log likelihood ratio". A positive value of the log likelihood ratio represents that the probability that 0 is assumed to be transmitted is higher. Conversely, a negative value of the log likelihood ratio represents that the probability that 1 is assumed to be transmitted is higher. Certainty that 0 or 1 has been received is higher as an absolute value of positive or negative values is higher, and used as an input when conducting decoding of soft decision. In decoding the receive signal of the MIMO, a method in which the likelihood of soft decision is evaluated on all of codes without conducting space separation in advance, and a transmission line is estimated by a decoder is called "maximum likelihood decision (MLD)".
However, the MLD is required to calculate the likelihood with respect to all of replicas. This means a process in which taking the combinations of all patterns where respective information is 0 or 1 into consideration, all of the replicas corresponding to the combinations are generated, a distance between the receiving point and each replica is calculated, and the likelihood of each information is computed with execution of the probability operation. Accordingly, there has been known that the amount of computation is factorially increased when the number of candidate replicas is large such as an increase in the number of antennas, or 64 quadrature amplitude modulations (QAM).
In order to solve the problem on the amount of computation, a method called "QR decomposition-MLD" has been introduced in, for example, Non Patent Literature 1. The QR decomposition-MLD means a method of conducting pre-operation in which a channel matrix is subjected to QR decomposition to provide an upper triangular matrix. For example, in a configuration of 2×2 transmitter/receiver antennas, four terms ($h_{11}$, $h_{12}$, $h_{21}$ $h_{22}$) appear in the channel matrix, and the receiving point is affected by respective two codes transmitted at the same time. For example, when the respective antennas transmit transmission codes in a quadrature phase shift keying (QPSK) having four kinds of code points, the 4×4=16 kinds of replicas occur. Since the number of receiver antennas is two, there is required a process of calculating the 16×2=32 kinds of replicas, and calculating a distance to the receiving point. When a transmission code is 64 QAM, there are 64 code point candidates for each transmitter antenna. Therefore, 64×64×2=8192 kinds of distance calculations occur, and the calculations become enormous. In the QR decomposition-MLD, the channel matrix is subjected to QR decomposition to reduce the number of transmitter antennas involved in the signals received by the respective receiver antennas, resulting in a reduction in the amount of computation. Also, in the QR decomposition-MLD, metrics calculated at the time when the number of involved antennas is small are ranked, candidate points are narrowed, and the amount of subsequent computation is largely reduced. Attention is paid to the QR decomposition-MLD, particularly, as a method in which the performance deterioration can be suppressed while remarkably reducing the amount of calculation when the number of antennas is increased.

Non Patent Literature 1: Technical Report of IEICE, RCS2003-312
Non Patent Literature 2: Technical Report of IEICE, RCS2003-313

Disclosure of Invention

Problem to be Solved by the Invention

As described in the above conventional art, in the MIMO, there have been known the MMSE in which the performance is deteriorated, but the signal throughput is small, and the MLD in which the performance is high, but the signal throughput is large. Also, there has been known the QR decomposition-MLD that suppresses the performance deterioration while reducing the signal throughput. However, even in the QR decomposition-MLD, a code error ratio may be increased when a specific condition is met.

In view of the above, the present invention aims at preventing the performance deterioration of the QR decomposition-MLD while suppressing an increase in required throughput. For that reason, in the present invention, for example, it is detected whether the condition in which the QR decomposition-MLD is deteriorated is met, or not, and full MLD is implemented only when it is detected that the condition is met.

Means for Solving the Problem

The above problem can be solved by an MIMO receiving system employing the QR decomposition-MLD. The MIMO receiving system includes: a step 1 of subjecting a receive channel matrix of N x N, which is obtained from N or more antennas, to QR decomposition to provide an upper triangular matrix for each symbol of the receive signal; a step 2 of extracting an M-th submatrix of the obtained receive channel matrix after the QR decomposition, and calculating candidate metrics of selectable replicas for the submatrix; a step 3 of ranking the metrics calculated in the step 2 in an increasing order when selecting a subsequent submatrix; and a step 4 of removing K-th and subsequent replicas having lower evaluation in the ranking from the candidates of the subsequent submatrixes. In the MIMO receiving system, if the largest metric obtained in the ranking of the step 3 is smaller than a specific threshold value, the above step 4 is bypassed, and the candidate of the replica is not selected.

Also, the above problem can be solved by the above MIMO receiving system in which an average value of the largest metrics obtained in the step 3 is obtained, and a value obtained by multiplying the average value by a predetermined coefficient is set as the threshold value.

Also, the above problem can be solved by the above MIMO receiving system in which the average value or the threshold value calculated previously is accumulated in an accumulator, and the accumulated value is used.

Also, the above problem can be solved by an MIMO receiving system employing the QR decomposition-MLD. The MIMO receiving system includes: a step 1 of subjecting a receive channel matrix of N x N, which is obtained from N or more antennas, to QR decomposition to provide an upper triangular matrix for each symbol of the receive signal; a step 2 of extracting an M-th submatrix of the obtained receive channel matrix after the QR decomposition, and calculating candidate metrics of selectable replicas for the submatrix; a step 3 of ranking the metrics calculated in the step 2 in an increasing order when selecting a subsequent submatrix; and a step 4 of removing K-th and subsequent replicas having lower evaluation in the ranking from the candidates of the subsequent submatrixes. In the MIMO receiving system, if the largest metric obtained in the ranking of the step 3 is smaller than a specific threshold value, a log likelihood ratio of an appropriate symbol is set to 0.

Also, the above problem can be solved by the above MIMO receiving system in which an average value of the largest metrics obtained in the step 3 is obtained, and a value obtained by multiplying the average value by a predetermined coefficient is set as the threshold value.

Also, the above problem can be solved by the above MIMO receiving system in which the average value or the threshold value calculated previously is accumulated in an accumulator, and the accumulated value is used.

Also, the above problem can be solved by an MIMO receiving system employing the QR decomposition-MLD. The MIMO receiving system includes: a step 1 of subjecting a receive channel matrix of N x N, which is obtained from N or more antennas, to QR decomposition to provide an upper triangular matrix for each symbol of the receive signal; a step 2 of extracting an M-th submatrix of the obtained receive channel matrix after the QR decomposition, and calculating candidate metrics of selectable replicas for the submatrix; a step 3 of ranking the metrics calculated in the step 2 in an increasing order when selecting a subsequent submatrix; and a step 4 of removing K-th and subsequent replicas having lower evaluation in the ranking from the candidates of the subsequent submatrixes. In the MIMO receiving system, degeneracy is detected from the channel matrix of an appropriate symbol, and if the degeneracy is detected, the above step 4 is bypassed, and the candidate of the replica is not selected.

Also, the above problem can be solved by an MIMO receiving system employing the QR decomposition-MLD. The MIMO receiving system includes: a step 1 of subjecting a receive channel matrix of N x N, which is obtained from N or more antennas, to QR decomposition to provide an upper triangular matrix for each symbol of the receive signal; a step 2 of extracting an M-th submatrix of the obtained receive channel matrix after the QR decomposition, and calculating candidate metrics of selectable replicas for the submatrix; a step 3 of ranking the metrics calculated in the step 2 in an increasing order when selecting a subsequent submatrix; and a step 4 of removing K-th and subsequent replicas having lower evaluation in the ranking from the candidates of the subsequent submatrixes. In the MIMO receiving system, degeneracy is detected from the channel matrix of an appropriate symbol, and if the degeneracy is detected, a log likelihood ratio of an appropriate symbol is set to 0.

According to the first means for solving of the present invention, there is provided an MIMO receiving method employing a QR decomposition-MLD, the method comprising:

a step 1 of subjecting a channel matrix of N x N, which is obtained from N (N is an integer of two or more) or more antennas, to QR decomposition to provide an upper triangular matrix for each symbol of a received signal;
a step 2 of extracting an M-th submatrix of the obtained channel matrix after the QR decomposition with an initial value of M as N, and calculating candidate metrics of selectable replicas for the submatrix;
a step 3 of ranking the metrics calculated in the step 2 in an increasing order;
a step 4 of removing predetermined K-th and subsequent replicas having lower evaluation in the ranking from the candidates of the subsequent submatrixes when the largest metric obtained in the ranking of the step 3 is larger than a predetermined specific threshold value;
a step 5 of decrementing M by 1, and repeating the step 2, the step 3, and the step 4 until M=1; and
a step 6 of bypassing the step 4 and shifting to the step 5 without selecting the candidate of the replica when the largest metric obtained in the ranking of the step 3 is smaller than the predetermined specific threshold value.

According to the second means for solving of the present invention, there is provided an MIMO receiving method employing a QR decomposition-MLD, the method comprising:

a step 1 of subjecting a channel matrix of N x N, which is obtained from N (N is an integer of two or more) or more antennas, to QR decomposition to provide an upper triangular matrix for each symbol of a received signal;
a step 2 of extracting an M-th submatrix of the obtained channel matrix after the QR decomposition with an initial value of M as N, and calculating candidate metrics of selectable replicas for the submatrix;
a step 3 of ranking the metrics calculated in the step 2 in an increasing order;
a step 4 of removing predetermined K-th and subsequent replicas having lower evaluation in the ranking from the candidates of the subsequent submatrixes when the largest metric obtained in the ranking of the step 3 is larger than a predetermined specific threshold value;
a step 5 of decrementing M by 1, and repeating the step 2, the step 3, and the step 4 until M=1; and
a step 6 of setting a log likelihood ratio of an appropriate symbol to zero when the largest metric obtained in the ranking of the step 3 is smaller than the predetermined specific threshold value.

According to the third means for solving of the present invention, there is provided an MIMO receiving method employing a QR decomposition-MLD, the method comprising:

a step 1 of subjecting a channel matrix of N x N, which is obtained from N (N is an integer of two or more) or more antennas, to QR decomposition to provide an upper triangular matrix for each symbol of a received signal;
a step 2 of extracting an M-th submatrix of the obtained channel matrix after the QR decomposition with an initial value of M as N, and calculating candidate metrics of selectable replicas for the submatrix;
a step 3 of ranking the metrics calculated in the step 2 in an increasing order;
a step 4 of detecting degeneracy from the channel matrix of an appropriate symbol, and removing predetermined K-th and subsequent replicas having lower evaluation in the ranking from the candidates of the subsequent submatrixes when the degeneracy is not detected;
a step 5 of decrementing M by 1, and repeating the step 2, the step 3, and the step 4 until M=1; and
a step 6 of detecting degeneracy from the channel matrix of the appropriate symbol, bypassing the step 4 and shifting to the step 5 without selecting the candidate of the replica when the degeneracy is detected.

According to the fourth means for solving of the present invention, there is provided an MIMO receiving method employing a QR decomposition-MLD, the method comprising:

a step 1 of subjecting a channel matrix of N x N, which is obtained from N (N is an integer of two or more) or more antennas, to QR decomposition to provide an upper triangular matrix for each symbol of a received signal;
a step 2 of extracting an M-th submatrix of the obtained channel matrix after the QR decomposition with an initial value of M as N, and calculating candidate metrics of selectable replicas for the submatrix;
a step 3 of ranking the metrics calculated in the step 2 in an increasing order;
a step 4 of detecting degeneracy from the channel matrix of an appropriate symbol, and removing predetermined K-th and subsequent replicas having lower evaluation in the ranking from the candidates of the subsequent submatrixes when the degeneracy is not detected;
a step 5 of decrementing M by 1, and repeating the step 2, the step 3, and the step 4 until M=1; and
a step 6 of detecting degeneracy from the channel matrix of the appropriate symbol, and setting a log likelihood ratio of the appropriate symbol to zero when the degeneracy is detected.

Advantageous Effect of Invention

According to the present invention, the performance of the QR decomposition-MLD can be improved, and the performance closer to the full MLD can be realized without largely increasing the amount of computation. In the present invention, for example, in the QR decomposition-MLD, it is detected whether the condition in which the performance is deteriorated is met, or not, and full MLD is implemented only when it is detected that the condition is met, with the result that the above advantages can be realized.

Brief Description of Drawings

[FIG. 1] FIG. 1 is a block diagram of a radio according to this embodiment.
[FIG. 2] FIG. 2 is a diagram illustrating a configuration chip of the radio according to this embodiment.
[FIG. 3] FIG. 3 is a flowchart of QR decomposition-MLD processing in a related art of this embodiment.
[FIG. 4] FIG. 4 is a flowchart of an MIMO receiving process according to a first embodiment.
[FIG. 5] FIG. 5 is a flowchart in a case having one unit for determining a value according to the first embodiment.
[FIG. 6] FIG. 6 is a flowchart in a case having another unit for determining the threshold value according to the first embodiment.
[FIG. 7] FIG. 7 is a flowchart of an MIMO receiving process according to a second embodiment.
[FIG. 8] FIG. 8 is a flowchart in a case having one unit for determining a threshold value according to the second embodiment.
[FIG. 9] FIG. 9 is a flowchart in a case having another unit for determining the threshold value according to the second embodiment.
[FIG. 10] FIG. 10 is a flowchart in a case having a unit for determining a branch under another condition according to the first embodiment.
[FIG. 11] FIG. 11 is a flowchart in a case having a unit for determining a branch under another condition according to the second embodiment.
[FIG. 12] FIG. 12 is a graph of simulation results illustrating a probability that full MLD operation is conducted according to this embodiment.
[FIG. 13] FIG. 13 is a graph of simulation results illustrating an improvement effect of a packet error ratio according to this embodiment.
[FIG. 14] FIG. 14 is a diagram illustrating a specific example of a constellation of QPSK transmission in a 2×2 MIMO.
[FIG. 15] FIG. 15 is a diagram illustrating a specific example of a channel matrix representative of a transmission line in the 2×2 MIMO.
[FIG. 16] FIG. 16 is a diagram illustrating a specific example of a QPSK receive signal in the 2×2 MIMO.
[FIG. 17] FIG. 17 is a diagram illustrating a specific example of the receive signal after QR decomposition of the 2×2 MIMO.
[FIG. 18] FIG. 18 is a diagram illustrating a specific example of an estimated receiving point related to a second expression and a real receiving point.
[FIG. 19] FIG. 19 is a diagram illustrating that the number of candidates of estimated receiving points related to the first expression is reduced by narrowing.
[FIG. 20] FIG. 20 is a diagram illustrating a specific example of a QPSK transmit signal in the 2×2 MIMO.

[FIG. 21] FIG. 21 is a diagram illustrating a specific example of a QPSK receive signal in the 2×2 MIMO.

[FIG. 22] FIG. 22 is a diagram illustrating a specific example of the receive signal after QR decomposition of the 2×2 MIMO.

[FIG. 23] FIG. 23 is a diagram illustrating a specific example in a case where noise is superimposed on the receive signal after QR decomposition of the 2×2 MIMO.

[FIG. 24] FIG. 24 is an illustrative diagram (1) of a log likelihood ratio calculation of the QPSK transmit signal in the 2×2 MIMO.

[FIG. 25] FIG. 25 is an illustrative diagram (2) of the log likelihood ratio calculation of the QPSK transmit signal in the 2×2 MIMO.

[FIG. 26] FIG. 26 is an illustrative diagram (3) of the log likelihood ratio calculation of the QPSK transmit signal in the 2×2 MIMO.

[FIG. 27] FIG. 27 is an illustrative diagram (4) of the log likelihood ratio calculation of the QPSK transmit signal in the 2×2 MIMO.

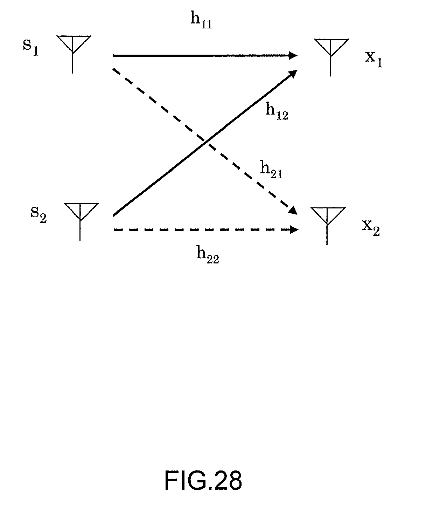

[FIG. 28] FIG. 28 is an illustrative diagram of an MIMO transmission.

Best Mode for Carrying Out the Invention

1. Outline of QR decomposition-MLD

As described above, in a radio communication, multi-input multi-output (MIMO) using a plurality of antennas is employed. In the MIMO, signals different from each other are transmitted from a plurality of transmitter antennas at the same time, and a signal combined in space is received by a plurality of receiver antennas. The received signal is decomposed in a manner of solving an equation to reproduce an original stream.

In a method of solving the MIMO, there has been known a minimum mean squared error (MMSE) obtaining log-likelihood ratio (LLR) of bit after space separation has been conducted in advance, with the use of the estimated channel matrix. Also, a method of conducting the space separation called "maximum likelihood decision (MLD) " in combination with the likelihood calculation at the same time has been known as a derivation of an optimum solution. However, the MLD is required to calculate metric calculation for all of replicas (distance calculation between a receiving point and the replica: calculation related to the likelihood of a candidate transmission code). There has been known that the amount of computation is factorially increased when the number of candidate replicas is large such as an increase in the number of antennas, or 64 QAM. In order to solve the above problem on the amount of computation, a method called "QR decomposition-MLD" has been known.

The QR decomposition-MLD indicates a method in which a channel matrix is subjected to QR decomposition to provide an upper triangular matrix, the likelihood is calculated with the use of the partial matrix, and replicas are ranked according to the likelihood calculation results to narrow the candidate points. Attention is paid to the QR decomposition-MLD, particularly, as a method in which the performance deterioration can be suppressed while remarkably reducing the amount of calculation when the number of antennas is increased. However, similarly, in the QR decomposition-MLD, a code error ratio may be increased when a specific condition is met. In the present invention and the embodiments, it is detected whether the condition in which the QR decomposition-MLD is deteriorated is met, or not, and full MLD is implemented only when it is detected that the condition is met, with the result that the performance deterioration of the QR decomposition-MLD can be prevented while suppressing an increase in the amount of computation as required.

2. Configuration of MIMO receiving device

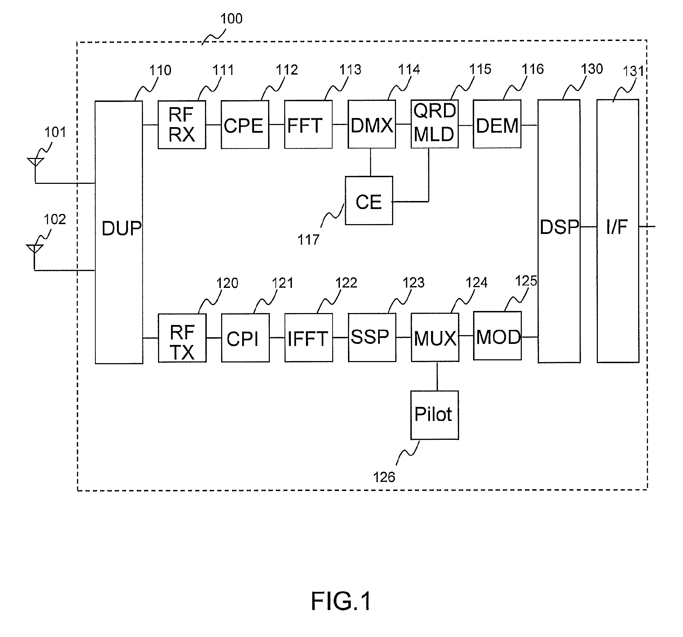

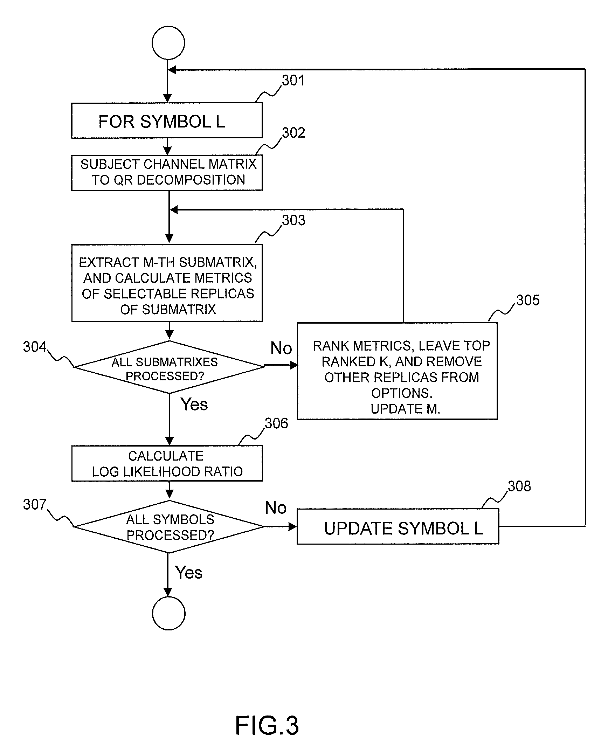

FIG. 1 is a block diagram of a MIMO receiving device according to this embodiment. Signals received by two antennas 101 and 102 are transmitted to a receiver through a duplexer 110. In an RF circuit 111 at a receiver side, the signal is converted into a digital signal after being subjected to necessary processing such as down conversion. A cyclic prefix (CP) is removed from the converted digital signal by a CP removal part 112. The CP is a signal inserted for improving a multi-path performance by an OFDM signal. Then, in a fast Fourier transform (FFT) circuit 113, a time domain is converted into a frequency domain, and separated into a signal for each of subcarriers. The signal separated into the signal for each subcarrier is separated into a pilot signal and so on for each of functions by the aid of a demultiplexer 114. With the separated pilot signal, a propagation channel is estimated by a channel estimator 117 to generate a channel matrix. With the use of this result, a log likelihood ratio (LLR) is obtained by an MLD processor 115 according to user information separated by the demultiplexer 114. The obtained log likelihood ratio is accumulated in an accumulator such as a memory, and thereafter input to a decoder 116. The decoder 116 solves an error correction such as a TURBO code according to the input log likelihood ratio, and outputs a most probable restoration signal. The decoder 116 checks a cyclic redundancy check (CRC) code inserted thereinto in this situation, and checks whether the code is correctly decoded, or not. If the code is correctly decoded, the decoded signal is delivered to a network or a higher-level layer through an interface 131 after being subjected to higher-level processing such as a media access control (MAC) through a digital signal processor (DSP) 130. A flow related to the MLD processing disclosed with reference to FIG. 3 is installed in the MLD processor 115, and executed. The MLD processor 115 can be implemented by hardware processing such as an application specific integrated circuit (ASIC) or a field programmable gate array (FPGA), or can be implemented by software processing such as a DSP. Functional blocks 120 to 126 are functional blocks at a transmitter side, and paired with receiver blocks.

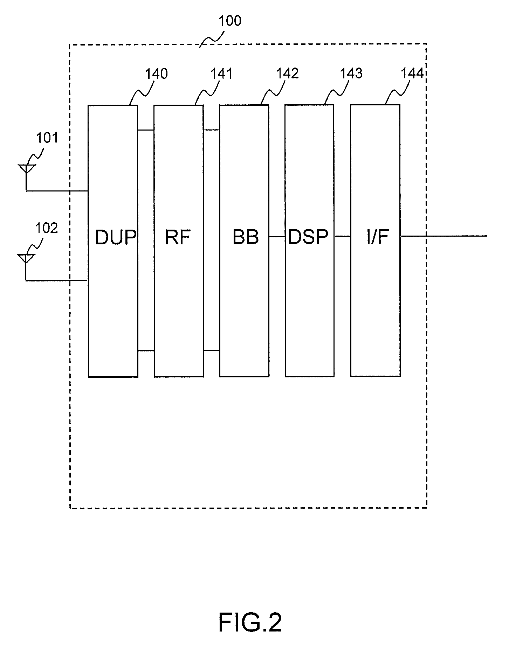

FIG. 2 illustrates a block diagram of a chip level of the MIMO receiving device. The signals received by the two antennas 101 and 102 are separated into upstream and downstream frequencies through a duplexer 140, and then input to an RF chip 141. Within an RF chip, the received signal is amplified by an amplifier not shown, and frequency-converted into a frequency of a baseband signal by a mixer not shown. Further, the signal is converted into a digital signal by an analog-digital conversion (AD conversion). In a baseband chip 142 subsequent to the RF chip, demodulating and decoding processes are conducted to estimate transmission information. A DSP chip 143 conducts the overall management and processing of the higher-level layer. The receiver is connected through an I/F 144 to a network if the receiver is a base station, and to the higher-level layer such as an application if the receiver is a terminal. If an error check of the estimated decoding result is not problematic, the receiver transmits the received information to the higher-level layer or the network through the I/F 144. The processing of the MLD disclosed in this embodiment is installed, for example, within the baseband chip 142.

3. QR decomposition-MLD: Related Art

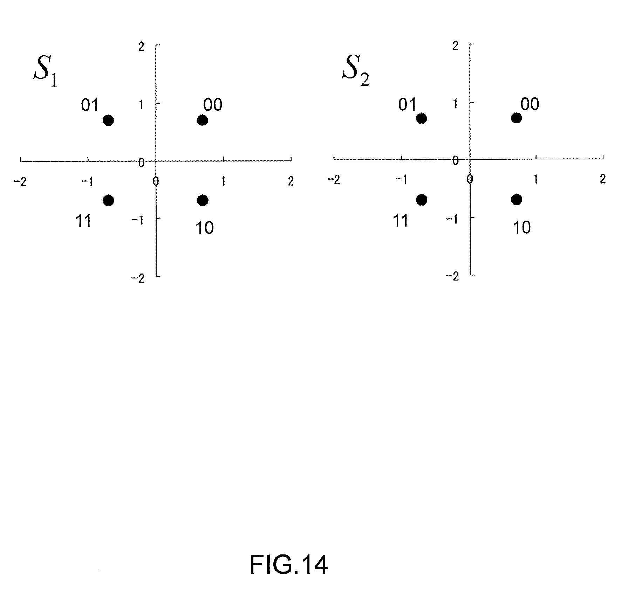

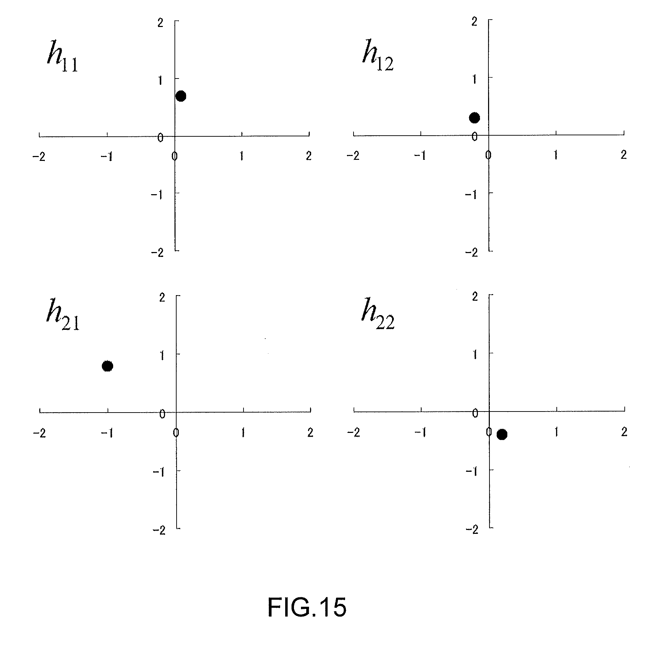

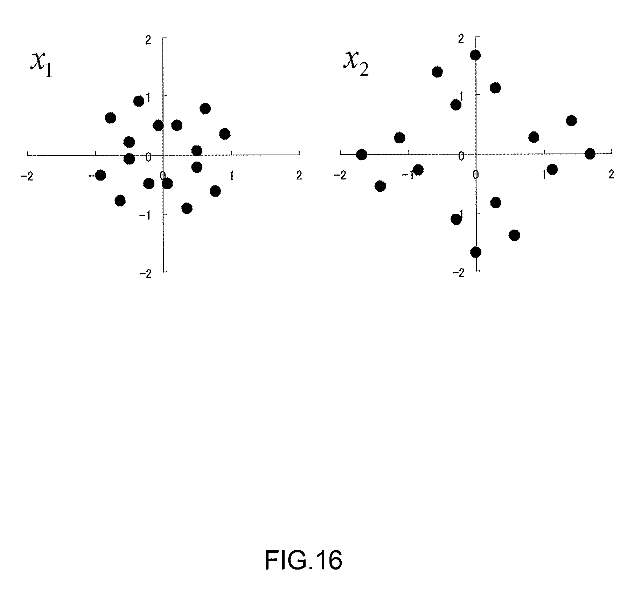

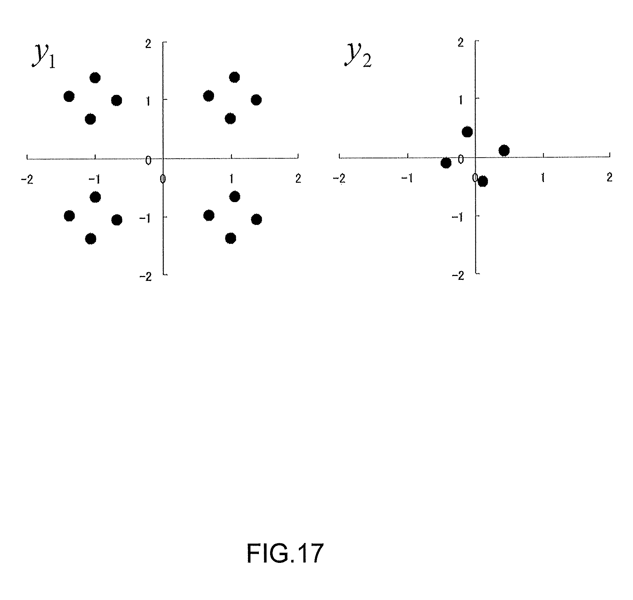

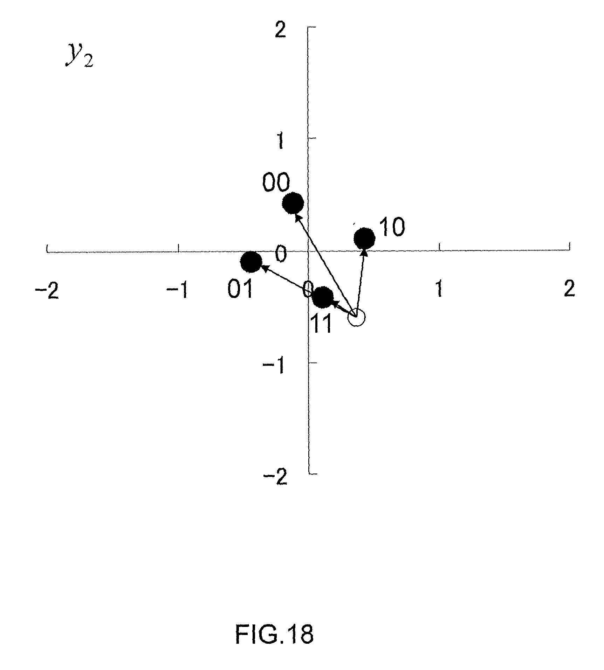

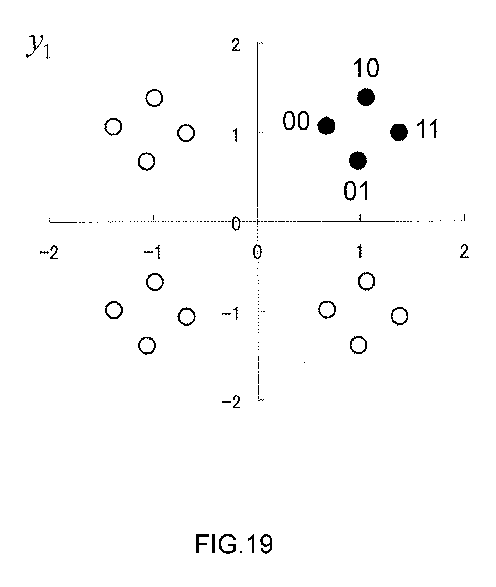

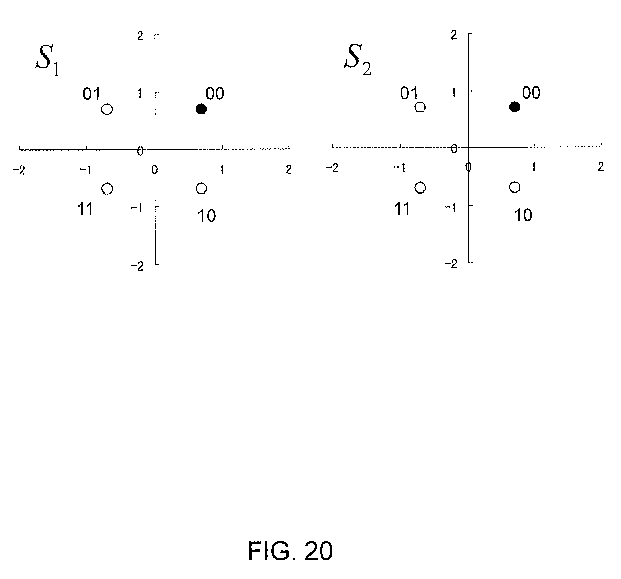

A flow of the QR decomposition-MLD will be described with reference to FIGS. 3, 14, 15, 16, 17, 18, 19, and 20. FIG. 3 is a flowchart of the QR decomposition-MLD computation. FIG. 20 is an illustrative diagram of the MIMO transmission. FIG. 14 is a diagram illustrating a specific example of a constellation of QPSK transmission in a 2×2 MIMO. FIG. 15 is a diagram illustrating a specific example of a channel matrix representative of a transmission line in the 2×2 MIMO. FIG. 16 is a diagram illustrating a specific example of a QPSK receive signal in the 2×2 MIMO. FIG. 17 is a diagram illustrating a specific example of the receive signal after QR decomposition of the 2×2 MIMO. FIG. 18 is a diagram illustrating a specific example of an estimated receiving point related to a second expression and a real receiving point. FIG. 19 is a diagram illustrating that the number of candidates of estimated receiving points related to the first expression is reduced by narrowing. For facilitation of the description, the 2×2 MIMO is described. However, the present invention is not limited to this category, but the same actions and advantages are obtained even in M×N MIMO. The respective steps of each flowchart are executed by the MLD processor 115 or the baseband chip 142. Hereinafter, the respective steps will be described.

• Step 301

In FIG. 3, a receive signal sequence including a plurality of symbols is first decomposed into the respective symbols. The symbol is representative of a minimum unit configured by 1 OFDM symbol × 1 subcarrier in a case of OFDM. In a case of single-input single-output (SISO), the symbol is transmitted from one antenna, and therefore represents one code having a constellation such as the QPSK or 16 QAM. In the 2×2 MIMO (QPSK), because different information is transmitted from two antennas at the same time, the symbol represents two codes including two constellations of signals $S_1$ and $S_2$ as exemplified in FIG. 14. The "constellations" is a word meaning asterism. The constellation means a code arrangement in a phase space (or on an IQ plane) in a code theory. In FIG. 14, four code points are indicated for each antenna, and each represent a code that enables information transmission of two bits. At the four points, two bits of "00", "01", "11", and "10" are represented.

The respective transmitted codes (signals) pass through a propagation channel (for example, FIG. 15), and two transmission codes (signals) are combined and received by the receiver antennas. In FIG. 15, each response of the propagation channel is indicated by a vector connecting an origin and a dot •. Because the receive signals are combined together after being weighted by the propagation channel, the receive signal is received as each signal point as illustrated in FIG. 16. Four points of transmission codes can be also defined as vectors. The "weighting" can be understood as a vector product obtained by multiplying the propagation channel (vector) by the transmitted code (vector). The codes transmitted from two antennas are represented by a sum of four points expressed by the vector product of $h_{11} \times s_1$ and four points expressed by the vector product of $h_{12} \times s_2$. Therefore, the codes are received as 16 signal points that are the combinations of 4 points × 4 points. They are signal points illustrated in FIG. 16. In the two receiver antennas, signals that each go through four independent propagation channels are received, and therefore, two kinds of constellations each having 16 candidates are obtained. With solution to the equation, the transmit signals are estimated. In this way, signals are received. In FIG. 16, for facilitation to understand the concept, plots are not affected by receiver noise and interference. The receiving points not taking the influence of noise into consideration are called "estimated receiving points (or replicas)" below. The real receiving points are affected by noise and so on, and therefore separate from the above estimated receiving points. Each real receiving point is represented by the following Expression.

[Ex. 1]

$$\mathbf{X} = \begin{bmatrix} x_1 \\ x_2 \end{bmatrix} = \begin{bmatrix} h_{11} & h_{12} \\ h_{21} & h_{22} \end{bmatrix} \begin{bmatrix} s_1 \\ s_2 \end{bmatrix} + \begin{bmatrix} n_1 \\ n_2 \end{bmatrix} = \mathbf{HS} + \mathbf{N}$$

where x is the receive signal, s is the transmit signal, h is a channel representative of the propagation channel, and n is a noise power. In this example, because the receiver receives the signals by the two antennas, the receive signal is expressed by a two-dimensional vector. Because the transmitter also transmit the signals by the two antennas, the transmit signal is expressed by a two-dimensional vector. Symbol h that is the propagation channels represents four channels from the two antennas to the two antennas, and are expressed by a matrix of $2\times2$. Because the noise mainly includes thermal noise of the receiver, the noise is expressed by a vector added to each of the two antennas of the receiver. In order to generate the estimated receiving point, there is a need to estimate the above propagation channel h. For that reason, the transmitter transmits a signal obtained by embedding the pilot signal which is known information in an appropriate symbol. The receiver detects the pilot signal to estimate the propagation channel. In a time or a frequency where there is no pilot, the propagation channel can be estimated by interpolating the result of the propagation channel estimation conducted with the symbol having the pilot signal. As a result, the receiver can estimate the channel matrix expressed by H in Expression 1.

• Step 302

In Step 302 of FIG. 3, the channel matrix is subjected to QR decomposition to provide an upper triangular matrix. An expression after the QR decomposition is represented as follows.

[Ex. 2]

$$\mathbf{Y} = \mathbf{GX} = \begin{bmatrix} y_1 \\ y_2 \end{bmatrix} = \begin{bmatrix} r_{11} & r_{12} \\ 0 & r_{22} \end{bmatrix} \begin{bmatrix} s_1 \\ s_2 \end{bmatrix} + \begin{bmatrix} \tilde{n}_1 \\ \tilde{n}_2 \end{bmatrix} = \mathbf{RS} + \mathbf{GN}$$

When it is assumed that a first term starts from the left of Expression 2, a vector Y of the first term represents a converted receive signal. A conversion equation is a second term which is obtained by multiplying the vector X of the receive signal by a conversion matrix G. In the term, G is a transformation operator that realizes the upper triangular matrix which is not limited to a unique operator but various operators may be conceivable. For example, a Givens rotation matrix has been also known as one of the transformation operators that realize the upper triangular matrix. A fourth term represents that GH is converted into R through the operator G. That is, when the respective terms of Expression 1 are multiplied by G, since GX=GHS+GN is satisfied, R=GH is met as compared with Expression 2. In this expression, the feature of R resides in that an element $r_{21}$ at the left side of the second expression is 0. Because of this format, the channel matrix is called "upper triangular".

[Ex. 3]

$$G = \frac{1}{\sqrt{|h_{11}|^2 + |h_{21}|^2}} \begin{bmatrix} h_{11}^* & h_{21}^* \\ -h_{21} & h_{11} \end{bmatrix}$$

where * is complex conjugate.
With the use of Expression 3, R=GH can be rewritten as follows.

[Ex. 4]

$$R = \begin{bmatrix} r_{11} & r_{12} \\ 0 & r_{22} \end{bmatrix} = \frac{1}{\sqrt{|h_{11}|^2 + |h_{21}|^2}} \begin{bmatrix} |h_{11}|^2 + |h_{21}|^2 & h_{11}^* h_{12} + h_{21}^* h_{22} \\ 0 & h_{11} h_{22} - h_{21} h_{12} \end{bmatrix}$$

In this step, with the use of Expression 3 as one example, operation for obtaining Y in Expression 2 and R in Expression 4 is implemented.

• Step 303

The processing is shifted to Step 303 in FIG. 3. In this step, rows where all of elements (1st to N-1$^{th}$) other than N-th column are 0 are to be processed, and therefore an initial value of M is set to N. Expression 2 can be interpreted as an equation consisting of two upper and low expressions. First, the second expression at the lower side is represented as follows.

[Ex. 5]

$$y_2 = r_{22} s_2 + \widetilde{n}_2$$

In the second expression, terms related to $s_1$ are erased by the upper triangular. The constellation is concentrated in four points as indicated by • in FIGS. 17 and 18. Assuming a candidate (replica) $R_2$ of $s_2$ (in QPSK, $R_2$ is any one of [00], [01], [11], and [10] of $s_2$ indicated in FIG. 14), the metric is represented by, for example, as follows.

[Ex. 6]

$$L(R_2) = \frac{\left|r_{22}R_2 - y_2\right|^2}{\left|\widetilde{n}_2\right|^2}$$

This is computed with respect to all candidates of $R_2$. The metric represents the probability likelihood, that is, probabilistic certainty (in this example, the likelihood is higher as the metric is smaller). The metric can be also obtained by using an appropriate index corresponding to a distance between the estimated receive point and the real receive point, which is obtained by the receive signal, for example.

• Step 304

The processing is shifted to Step 304 in FIG. 3. It is checked whether processing related to all submatrixes is completed, or not, in Expression 2. In the processing up to this time, the processing related to Expression 5 is completed, but the processing related to the following expression that is the first expression is not completed. Therefore, the processing is shifted to Step 305.

[Ex. 7]

$$y_1 = r_{11}s_1 + r_{12}s_2 + \widetilde{n}_1$$

• Step 305

The processing is shifted to Step 305 in FIG. 3. The metrics related to all of the candidates, which are calculated in Step 303, are ranked in a increasing order of the value of Expression 6 (decreasing order of the likelihood). The smallest metric of Expression 6 is ranked No. 1. In the ranking, the higher K candidates (K is a predetermined value) are left, and the other candidates are removed from the candidates as impossible ones.
In FIG. 17, the receive signals after the QR decomposition, that is, values of Y are plotted. $y_2$ is affected by only $s_2$, and therefore degenerated at only four points. In this degenerated state, the candidate points of $s_2$ are narrowed to a predetermined number. The narrowing method is based on the metric. The method uses a fact that the metric is related to the distance between the estimated receive point and the real receive point, and a value of the metric becomes larger as the distance is longer. That is, the higher K candidates that are smaller in the metric are left.
FIG. 18 illustrates the estimated receive points (black circles: 4 points) obtained from the channel matrix and the replicas (candidate points $R_2$ of $s_2$ illustrated in FIG. 14) and the real receive point (white circle: one point). The real receive point (this receive point is affected by noise and interference, and therefore deviated from the constellation of FIG. 17) is affected by noise. However, if noise follows the Gaussian distribution, it is conceivable that the likelihood of the estimated receive point closest in distance to the real receive point is highest, and the metric becomes a smallest value. In FIG. 18, a point (11) closest in distance is probable, and a value smallest in the metric. Conversely, points (00), (10), and (01) are large in metric, and can be determined as impossible points. Hence, for example, if K=1 is met, the point (11) is selected, and the points (00), (10), and (01) are removed from the candidates. After selection, M is updated so that the processing related to Expression 7 can be conducted. That is, in this example, M is updated as M-1, and the processing is shifted to a first stage of Expression 2.

• Step 303-Second

The processing is returned to Step 303 (second) in FIG. 3. In the two upper and lower expressions of Expression 2, at this time, the processing related to a first expression (Expression 7) of the upper side is conducted. In Expression

7, contribution from $s_1$ and $s_2$ affects $y_1$. When it is assumed that the candidates of $s_1$ and $s_2$ are $R_1$ and $R_2$, the metric is represented by, for example, the following expression.

[Ex. 8]

$$L(R_1, R_2) = \frac{\left| r_{11}R_1 + r_{12}R_2 - y_1 \right|^2}{\left| \widetilde{n}_1 \right|^2} + \frac{\left| r_{22}R_2 - y_2 \right|^2}{\left| \widetilde{n}_2 \right|^2}$$

where attention needs to be paid to a fact that the candidates of $R_2$ are narrowed in Step S305. When it is assumed that $R_2$ is narrowed to only the point (11), $R_2$ has only one candidate. Therefore, the number of combinations of ($R_1$, $R_2$) is only four, and the amount of calculation is reduced to 1/4.

FIG. 19 illustrates the estimated receive points obtained from the channel matrix and the replicas (candidate points $R_1$ of $s_1$ illustrated in FIG. 14). The number of candidates ($R_1$, $R_2$) is 16 points, which are indicated by white circles and black circles. However, because $R_2$ is narrowed to the point (11), four points indicated by the black circles become the candidates of ($R_1$. $R_2$).

• Step 304-Second

The processing is shifted to Step 304 in FIG. 3. It is checked whether the processing related to all the submatrixes in Expression 2 has been completed, or not. In the processing up to this time, since the processing related to Expressions 5 and 7 has been completed, and the processing of all the submatrixes has been completed, the processing is shifted to Step 306.

• Step 306

The processing is shifted to Step 306 in FIG. 3. In this step, the log likelihood ratio (LLR) is calculated according to the obtained respective candidates or metrics of the replicas. In the example of FIG. 14, because QPSK symbols that can transmit information of two bits are transmitted from the respective two antennas at the same time, information of four bits in total can be transmitted at a time. The log likelihood ratio for each bit is obtained in the following procedure. That is, attention is paid to the respective four bits, and a probability $P_0$ when it is assumed that the transmitter side has transmitted 0 is calculated. Also, a probability $P_1$ when it is assumed that the transmitter side has transmitted 1 is calculated. Then, log ($P_0/P_1$) where a ratio of those probabilities is taken and also logarithmically transformed is calculated. When it is assumed that transmit information ($s_1$, $s_2$) is divided into bit information, and expressed as four bits such as (($b_0$, $b_1$), ($b_2$, $b_3$)), each bit means that attention is paid to one bit among those four bits. For example, when attention is paid to only the bit of $b_1$, all of eight combinations of the other bits ($b_0$, $b_2$, $b_3$) are taken into consideration, and the probabilities for $P_0$ and $P_1$ are calculated. Because it is heavy to calculate the probabilities for eight kinds of combinations, for example, MAX log MAP approximation has been well known for the purpose of reducing the amount of calculation. This is a method in which although the 8 kinds of combinations should be originally taken into consideration, only the combinations of bits where the metric becomes smallest are selected, and $P_0$ or $P_1$ is approximated with the probability of the bit combinations. As other algorithms, for example, sphere decoding and sequential Gaussian approximation (SGA) have been also known, and appropriate algorithms can be used.

If it is assumed that noise has the Gaussian distribution, the probability is expressed as $\exp(-x^2)$. A part of $x^2$ in this expression corresponds to the metric calculated up to this time. Accordingly, the likelihood ratio can not only obtain an advantage that $P_0/P_1$ is simply replaced with a difference such as $\log(P_0)-\log(P_1)$, but also can eliminate the operation of exp required for calculation of $P_0$ or $P_1$, through a logarithmic arithmetic. Consequently, the log likelihood ratio is obtained by selecting, when it is assumed that a bit to which attention is paid is 0 or 1, a combination in which the metric is smallest from all the combinations of the other bits, and calculating a difference between $\log(P_0)$ and $\log(P_1)$ with the use of a fact that the minimum metric becomes $\log(P_0)$ or $\log(P_1)$. This operation is conducted on all of the four bits.

The four log likelihood ratios corresponding to the obtained four bits are real numbers of positive or negative values. This means an index indicating information that the probability that 0 is conceivably transmitted is higher if the real number is a positive value, and means that the transmission information of 0 is more probable as the positive value is larger. Conversely, this is an index meaning information that a probability that 1 is conceivably transmitted is higher if the real number is a negative value, and means that the transmission information of 1 is more probable as the negative value is smaller. In the above example, the obtained log likelihood ratio is accumulated in a memory or the like as positive or negative real numbers in turn for each four bits.

Hereinafter, the above description will be supplemented with one specific example.

FIG. 20 is a diagram illustrating a specific example of a QPSK transmit signal in the $2\times2$ MIMO.

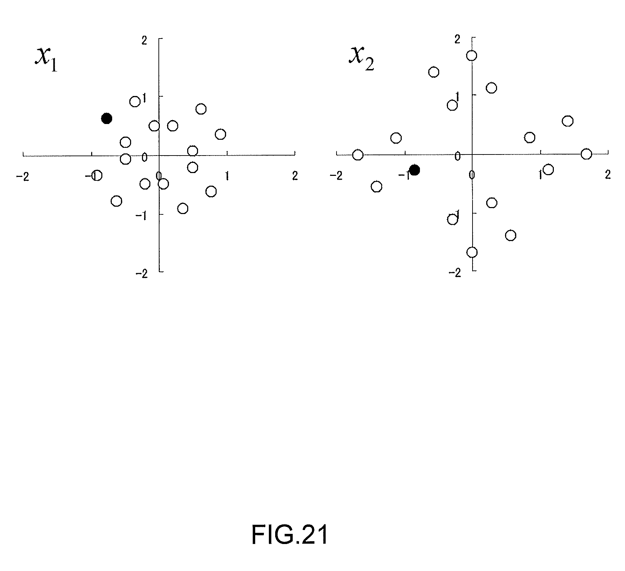

FIG. 21 is a diagram illustrating a specific example of a QPSK receive signal in the $2\times2$ MIMO.

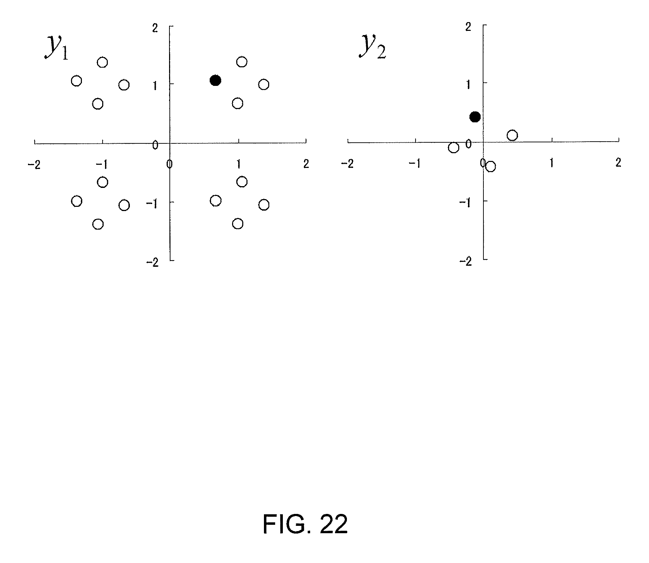

FIG. 22 is a diagram illustrating a specific diagram of the receive signal after QR decomposition of the $2\times2$ MIMO.

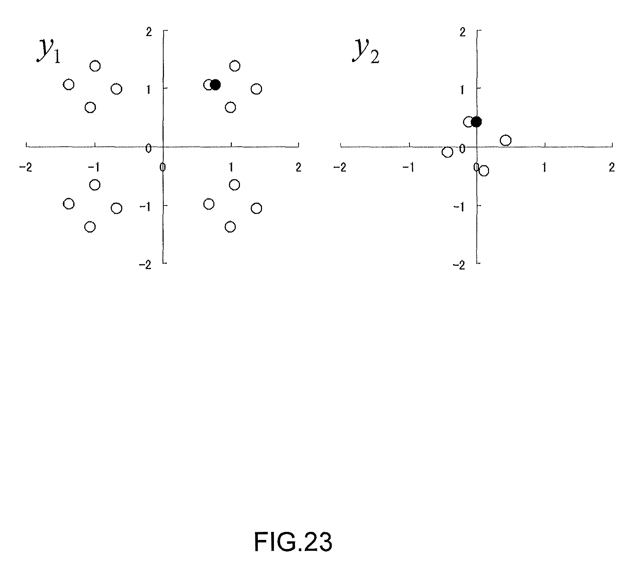

FIG. 23 is a diagram illustrating a specific example in a case where noise is superimposed on the receive signal after QR decomposition of the $2\times2$ MIMO.

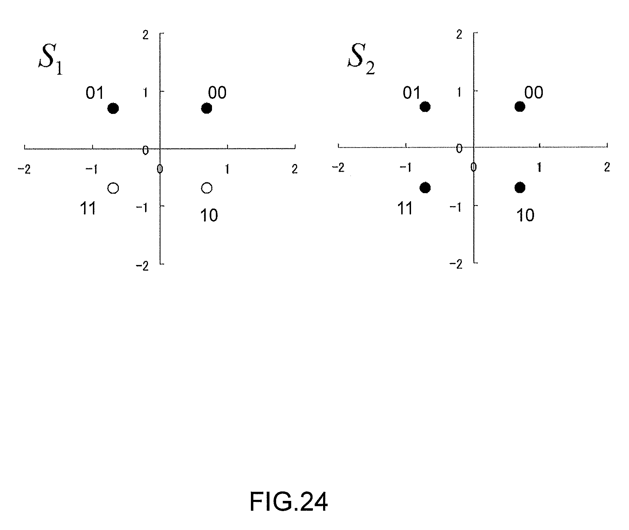

FIGS. 24 to 27 are illustrative diagrams (1) to (4) of log likelihood ratio calculation of the QPSK transmit signal in the $2\times2$ MIMO.

It is assumed that FIG. 14 illustrates transmission codes. In particular, it is assumed that $(s_1,s_2)$ = ("00","00") is transmitted. On a plane, it is assumed that information of $s_1$=(0.70,0.70) and $s_2$=(0.70,0.70) is transmitted (black circles in FIG. 20). The received signals are combined together on the propagation channel to obtain $x_1$=(-0.77,0.63) and $x_2$=(-0.84,-0.28) (black circles in FIG. 21). The received points after QR decomposition become $y_1$=(0.67,1.06) and $y_2$=(-0.11,0.43) (black circles in FIG. 22). In fact, because noise is superimposed on the receive signal, when it is assumed that both antennas have (0.1,0.0) as noise, for example, the received points are deviated from the black circles in FIG. 22, and become $y_1$=(0.77,1.06) and $y_2$=(-0.01,0.43) (black circles in FIG. 23).

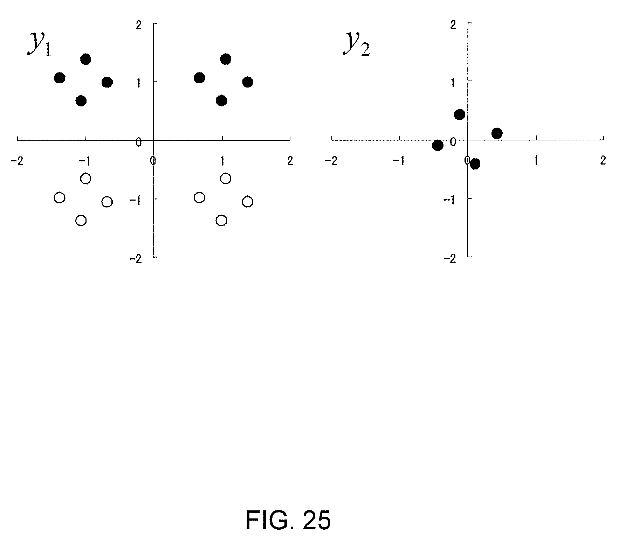

In this situation, let us consider a first bit of $s_1$. When it is assumed that $(s_1, s_2)$=("0x","xx") where x is arbitrary is transmitted, as $P_0$, eight kinds of combinations in total including two kinds of combinations in $s_1$ and four kinds of combinations in $s_2$ illustrated in FIG. 24 are conceivable. When the propagation channel is provided, the replicas are created, and QR decomposition is conducted, eight kinds of replicas can be created as $y_1$ illustrated in FIG. 25, and four kinds of replicas can be created as $y_2$. With the use of those replicas, the metrics of the receiving points $y_1$=(0.77,1.06) and $y_2$=(-0.01,0.43) (black circles in FIG. 23) are calculated. In this example, replicas $y_1$=(0.67,1.06) and $y_2$=(-0.1,0.43) (FIG. 25) which have transmitted $(s_1, s_2)$=("00","00") are smallest in the metric. In MAX log MAP approximation, because only the shortest replica is considered, $P_0$ is represented by the following expression.

[Ex. 9]

$$P0 = \exp\{-L(R_1, R_2)\}$$

$$= \exp\left\{-\frac{(0.67-0.77)^2 + (1.06-1.06)^2}{|\widetilde{n}_1|^2}\right\}$$

$$\times \exp\left\{-\frac{(-0.11+0.01)^2 + (0.43-0.43)^2}{|\widetilde{n}_2|^2}\right\}$$

$$= \exp\left\{-\frac{|0.1|^2}{|\widetilde{n}_1|^2} - \frac{|0.1|^2}{|\widetilde{n}_2|^2}\right\}$$

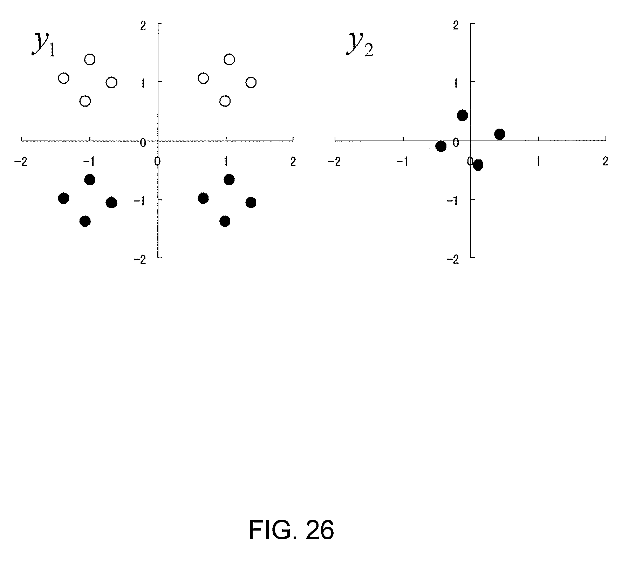

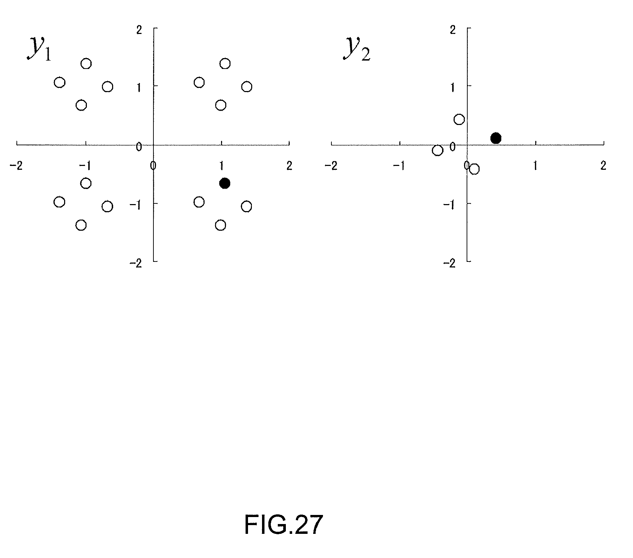

Likewise, $P_1$ is calculated. Eight kinds of replicas as $y_1$ and four kinds of replicas as $y_2$ can be created as indicated in black circles of FIG. 26. With the use of those replicas, the metrics of the receiving points $y_1=(0.77,1.06)$ and $y_2=(-0.01,0.43)$ (black circles in FIG. 23) are calculated. In this example, replicas $y_1=(1.06,-0.67)$ and $y_2=(0.43,0.11)$ which have transmitted $(s_1, s_2)=("10","10")$ are shortest in distance (black circles in FIG. 27). In MAX log MAP approximation, because only the shortest replica is considered, $P_1$ is represented by the following expression.

[Ex. 10]

$$P1 = \exp\{-L(R_1, R_2)\}$$

$$= \exp\left\{-\frac{(1.06-0.77)^2 + (-0.67-1.06)^2}{|\widetilde{n}_1|^2}\right\}$$

$$\times \exp\left\{-\frac{(0.43+0.01)^2 + (0.11-0.43)^2}{|\widetilde{n}_2|^2}\right\}$$

$$= \exp\left\{-\frac{3.09}{|\widetilde{n}_1|^2} - \frac{1.25}{|\widetilde{n}_2|^2}\right\}$$

The log likelihood ratio is represented as follows.

[Ex. 11]

$$\log\{P0/P1\} = -\frac{0.01}{|\widetilde{n}_1|^2} - \frac{0.01}{|\widetilde{n}_2|^2} - \left\{-\frac{3.09}{|\widetilde{n}_1|^2} - \frac{1.25}{|\widetilde{n}_2|^2}\right\}$$

$$= \frac{3.08}{|\widetilde{n}_1|^2} + \frac{1.24}{|\widetilde{n}_2|^2}$$

In this example, through Expression 11, the log likelihood ratio is positive, and $b_0$ bit indicates information that the probability that 0 has been transmitted is higher. Likewise, the log likelihood ratio is calculated for each of the bits $b_1$, $b_2$, and $b_3$.

• Step 307

The processing is shifted to Step 307 in FIG. 3. In this step, it is checked whether the processing related to all of the symbols has been completed, or not. If the processing related to all of the symbols has not been completed, the processing is shifted to Step 308, a subject symbol is updated, and the processing is returned to Step 301. Also, if the processing related to all of the symbols has been completed, the log likelihood ratio accumulated in the memory or the like in Step 306 is delivered to the decoder 116 of a subsequent block, and the processing is completed.

4. First Embodiment

In the QR decomposition-MLD, when the channel matrix is close to degeneracy, or when noise of an appropriate symbol is increased, the metric operation result related to Expression 6 becomes small wholly, and in this case, the performance may be deteriorated. When degeneracy is conducted, for example, in the constellation of $y_2$ in FIG. 18, all of the four candidate points • are distributed in the vicinity of an origin. Also, with addition of noise, determination of those four points becomes difficult. In this case, when the candidate point is removed according to only simple ranking, although the ranking information has no reliability, another candidate point is eliminated so as not to be selected. As a result, it becomes extremely difficult to correct an error.

The degeneracy is, for example, a condition for satisfying the following expression in Expression 1, and a condition in which an equation consisting of two expressions is not solved.

$$h_{11}h_{22}-h_{12}h_{21}=0$$

For that reason, it is determined to meet the above condition, and in that case, the selection of the candidates conducted in Step 305 is stopped to obtain a performance closer to that of the MLD.

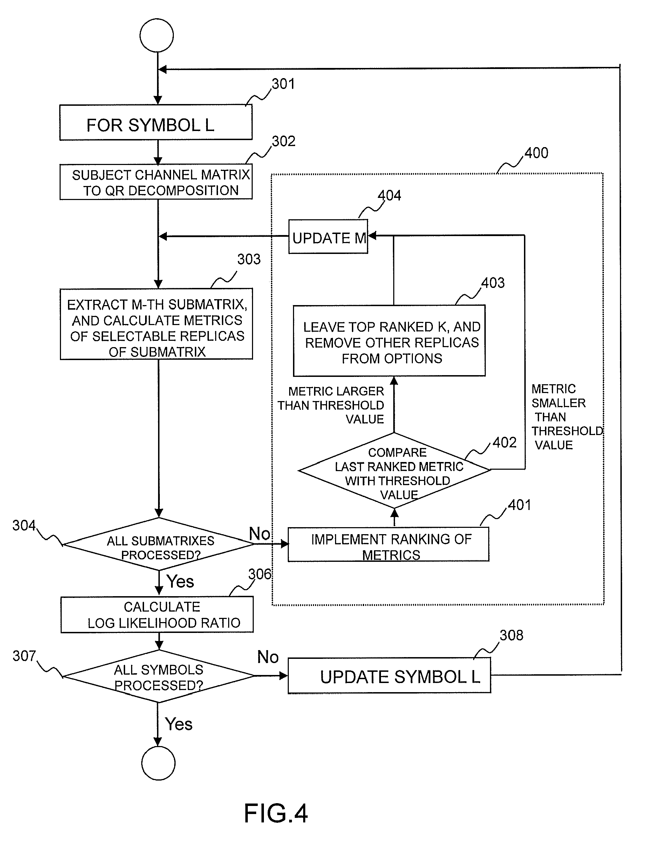

Hence, a flow of the QR decomposition-MLD described above with the use of FIG. 3 is implemented by a method illustrated in FIG. 4.

FIG. 4 illustrates a flowchart of an MIMO receiving process according to a first embodiment.

A difference between an embodiment of FIG. 3 and an embodiment of FIG. 4 exists only in a frame indicated by Step 400 in FIG. 4, and resides in a part indicated as Step 305 in FIG. 3. Hence, since the other steps having identical reference numerals conduct the same processing, only the different part will be described below.

• Step 400

Step 304 in FIG. 4 is shifted to Step 401. Metrics related to all of the candidates calculated in Step 303 are ranked in an increasing order of a value of Expression 6 (decreasing order of the likelihood). The smallest metric in Expression 6 is ranked No. 1.

The processing is shifted to Step 402 in FIG. 4. A metric of a last ranked candidate is compared with a predetermined threshold value. As a result of comparison, if the metric is larger than the threshold value, the processing is shifted to Step 403 whereas if the metric is smaller than the threshold value, the processing is shifted to Step 404 without narrowing the candidates.

If the processing is shifted to Step 403 in FIG. 4, the candidates of the top K are left, and other candidates are removed from the candidates as impossible ones. Thereafter, the processing is shifted to Step 404.

In Step 404 of FIG. 4, M is updated (for example, M is set as M-1).

With the above correction, a case in which the performance is deteriorated by the QR decomposition-MLD is predicted, and the processing can be conducted as the full MLD. In most cases, because the processing is conducted as the QR decomposition-MLD, an increase in the amount of computation can be also suppressed by about several times at a maximum. Hence, the problem is solved.

(Modified Example)

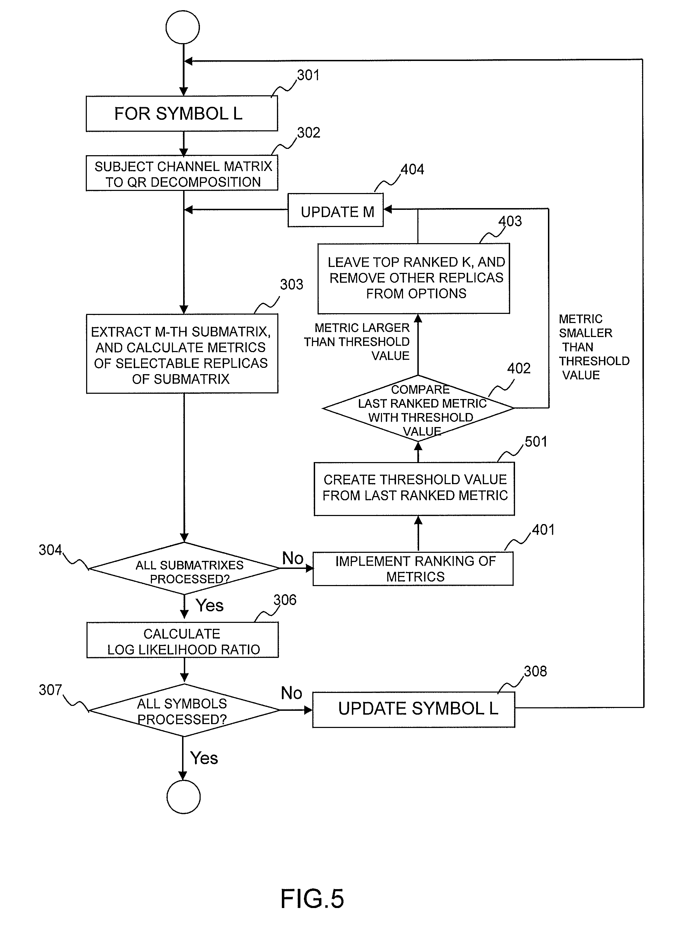

FIG. 5 illustrates a flowchart in a case having one unit for determining a threshold value according to a first embodiment.

Incidentally, the threshold value may be determined in advance or can be created on the basis of a calculation result. Because there has been known that degeneracy or a status in which a noise level is high occurs in only a specific symbol, the threshold value that can detect it needs to be calculated. Specifically, the threshold value can be created on the basis of the last ranked metric in conducting the past operation such as a foregoing subframe or OFDM symbol.

FIG. 5 illustrates a flowchart thereof. A difference between FIGS. 4 and 5 resides in Step 501, and the other steps having identical reference numerals conduct the same processing. There is provided a unit that averages the last ranked replicas (largest in the metric) for different symbols in the ranked metrics in Step 401, and the average value can be multiplied by a coefficient to provide the threshold value. The threshold value needs to be changed according to M. The averaging described in the specification means, for example, a simple average related to the symbol. In conducting the information processing of an L symbol, ranking information for each symbol has been recorded in advance, an average value of the metrics of the last ranked replicas is calculated, and the average value is set as the threshold value. The other processing is identical with that in the method described with reference to FIG. 4.

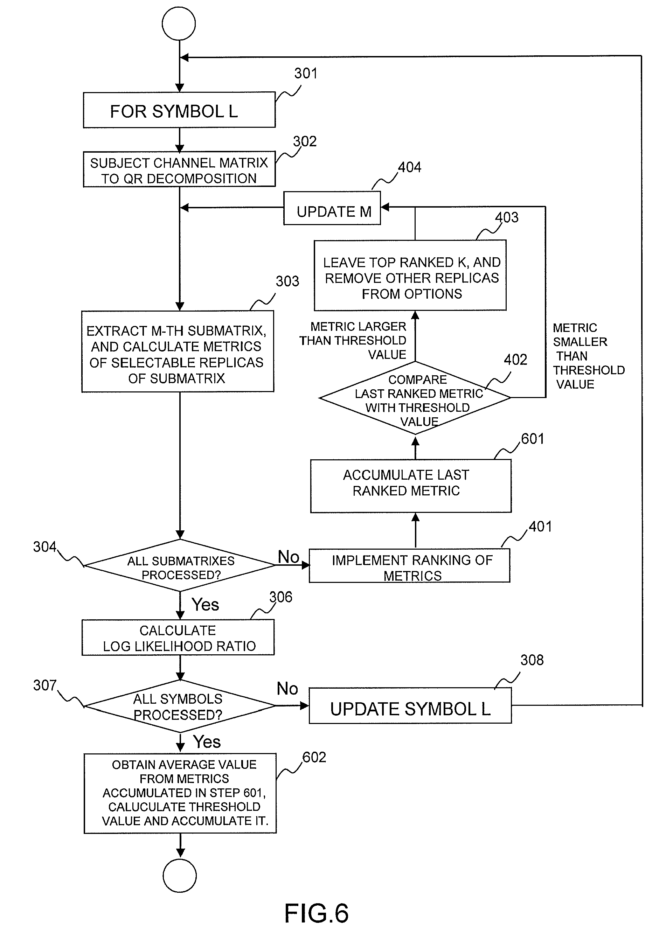

FIG. 6 is a flowchart in a case having another unit for determining the threshold value according to the first embodiment. In order to implement the method illustrated in FIG. 5, there is a need to record all the metrics, which requires an enormous amount of memories. For that reason, a memory reduction method described below may be used.

That is, FIG. 6 illustrates a flow of calculating the threshold value on the basis of statistic of the past calculation results of not only the latest symbol but also a symbol before one subframe, as an averaging unit. Because the propagation channel as the statistic does not largely change even if the past calculation results are used, the past calculation results can be used. Differences between FIGS. 6 and 4 reside in Steps 601 and 602, and the other steps having identical reference numerals conduct the same processing. In Step 601, the last ranked metric (largest in the metric) is accumulated in a memory or the like. In Step 602, after the processing for all the symbols has been completed, the metric accumulated in Step 601 is read, the average operation is conducted, and the average is multiplied by a coefficient to calculate the threshold value. The obtained threshold value is accumulated in the memory or the like for the purpose of using the threshold value for comparison in Step 402.

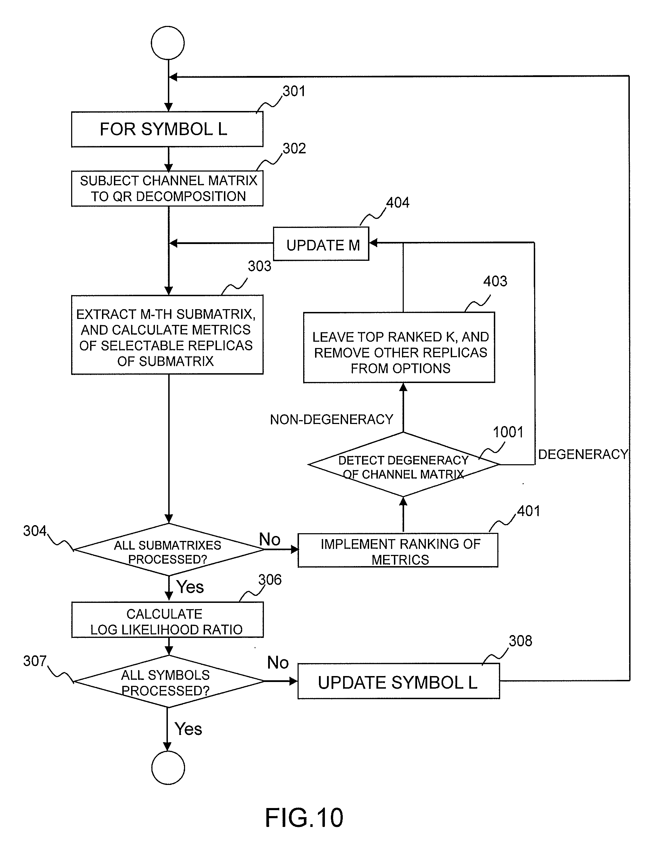

Also, FIG. 10 is a flowchart in a case having a unit for determining a branch under another condition according to the first embodiment. In Step 402 of FIG. 4, the last ranked metric, as a reference, is compared with the threshold value. However, the present invention is not limited to this. A difference between FIGS. 4 and 10 resides in Step 1001, and the other steps having the same reference symbols are identical with each other. For example, as in Step 1001 of FIG. 10, it is determined whether the channel matrix is degenerated, or not, and the degeneracy or non-degeneracy can be determined. In this case, because the determination condition is different from that described in FIG. 4, a slight difference occurs in the performance. However, because the symbol to be operated as the full MLD can be accurately determined as in FIG. 4, an improvement in the performance is found as compared with the conventional QR decomposition-MLD. Hence, the problem can be solved. As a specific degeneracy determination method, there is a method of measuring a rank of a channel matrix H. As operation, a singular value decomposition (SVD) or the like is well known. Alternatively, if a two-dimensional matrix is applied, an easy determination in which a value of $R_{22}=h_{11}\times h_{22}-h_{12}\times h_{21}$ is nearly close to 0 may be conducted.

(Advantageous Effects of First Embodiment)

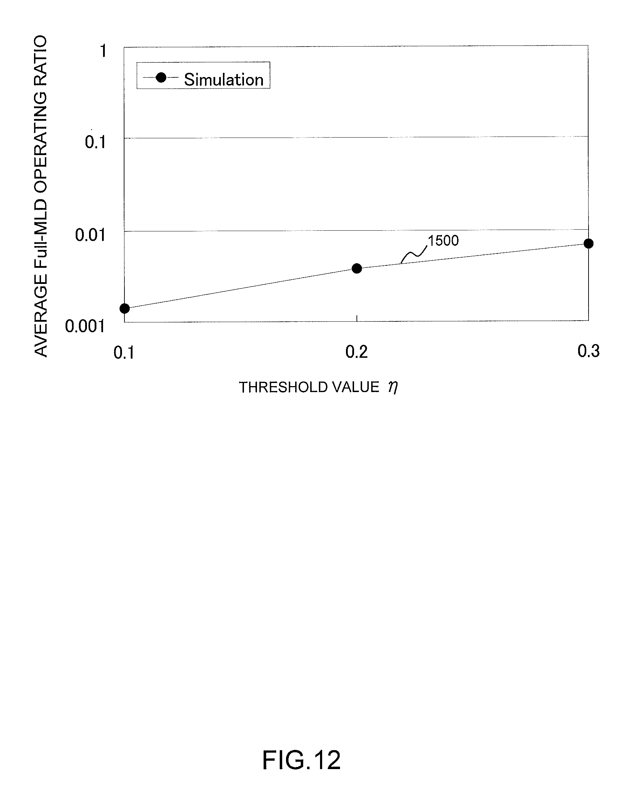

FIG. 12 illustrates a probability that the symbol operates as the full MLD when the embodiment of FIG. 6 is simulated. The probability that the symbol operates as the full MLD depends on the above coefficient by which the average value is multiplied. The threshold value becomes larger as the coefficient is larger, and therefore a probability that the last metric becomes the threshold value or lower increases. As a result, the probability that the symbol operates as the full MLD increases. The simulation result shows that even if the coefficient is set to 0.3, the operating ratio is 1% or lower, and in most cases, the symbol operates as the QR decomposition-MLD. According to Non Patent Literature 2, there is a difference of about 300 times in the amount of computation between the full MLD and the QR decomposition-MLD in the case of $4\times 4$MIMO. According to FIG. 12, the operating ratio of the full MLD according to this embodiment is about 0.5%, and therefore the amount of computation of about 2.5 times is required with derivation from $1+300\times 0.005=2.5$. However, the amount of computation can be reduced by nearly double digits as compared with the full MLD.

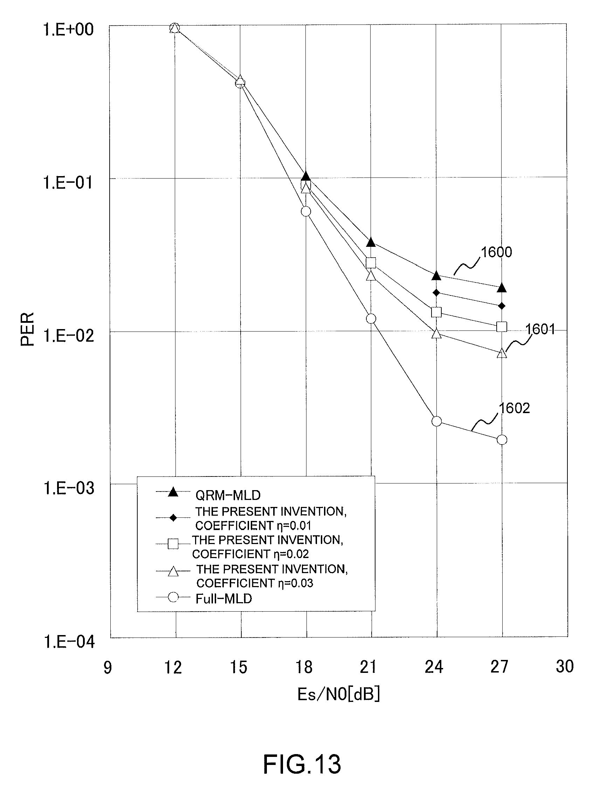

FIG. 13 illustrates a packet error rate (PER) characteristic under the same condition as that in FIG. 12. The axis of abscissa is Es/N$_0$, and the signal quality is higher toward the right side. The QR decomposition-MLD indicated by triangles (▲) is deteriorated in characteristic as compared with the full MLD indicated by circles (○). However, in this embodiment indicated by triangles (△) in which the coefficient is 0.3, the characteristic can be largely improved. As illustrated by FIG. 12, the operating ratio as the full MLD when the coefficient is 0.3 is 1% or lower, and therefore it is found that the condition under which the QR decomposition-MLD is deteriorated is well detected, and the symbol operates as the full MLD operation with high efficiency. Hence, the problem can be solved.

5. Second Embodiment

In the first embodiment, the description is given of a novel algorithm that allows the symbol to operate as the full MLD when the last ranked metric becomes the threshold value or lower. However, as the symbol operates as the full MLD, the amount of computation is increased by several times. Under the circumstances, there is a method in which the log likelihood ratio of the symbol is set to 0 (symbol not positive and not negative and having no information) originally assuming that the error correction operates. The occurrence of the code error is originally caused by provision of a step in which, for example, although a specific symbol is degenerated from the propagation status, and low-ranked, and the reliability is remarkably reduced, the symbol is subjected to QR decomposition to forcedly decide a transmit symbol of a specific antenna. Despite the symbol of no reliability, the correction of the incorrect result becomes difficult, which is problematic. Therefore, the degenerated and low-ranked symbol is set to 0 without calculation of the log likelihood ratio (information indicating that the probability that the transmission information is 0 is high if the ratio is plus, and indicating that the probability that the transmission information is 1 is high if the ratio is minus), and does not affect the computation of the other bits. This enhances the performance.

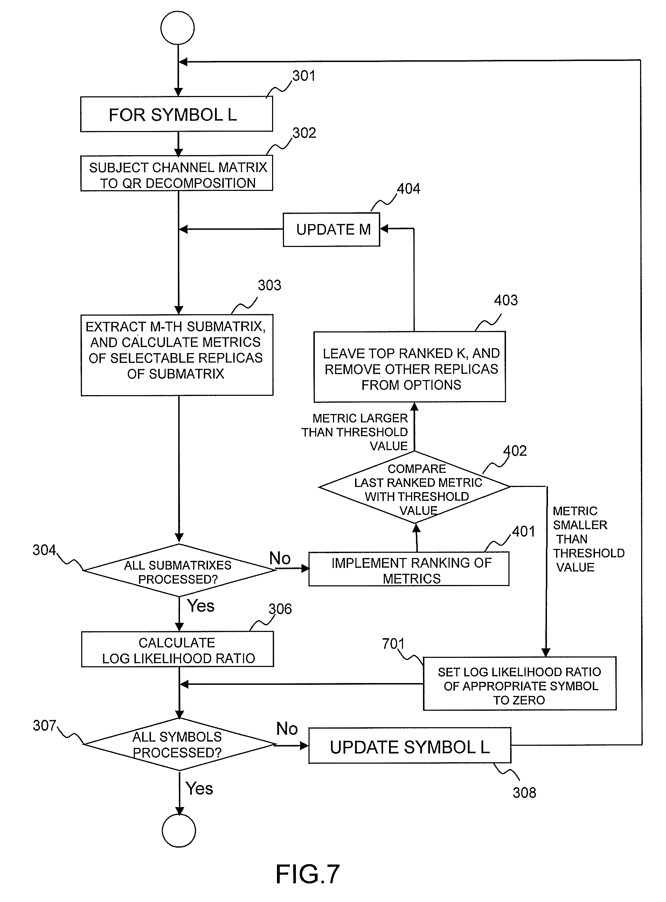

FIG. 7 is a flowchart of an MIMO receiving process for illustrating the above flow according to a second embodiment. A difference between FIGS. 4 and 7 resides in Step 701, and the other steps having the same reference symbols are identical with each other. In Step 402, the last ranked metric is compared with the threshold value as in the first embodiment. As a result of the comparison, if the metric is larger than the threshold value, the processing is shifted to Step 403. However, if the metric is smaller than the threshold value, the processing is shifted to Step 701, and the log likelihood ratio related to the symbol is set to 0. Further, the processing is shifted to Step 307.

With the above operation, occurrence of an error caused by the error propagation can be prevented by the QR decomposition-MLD without operating the full MLD. Hence, the problem can be solved.

(Modified Example)

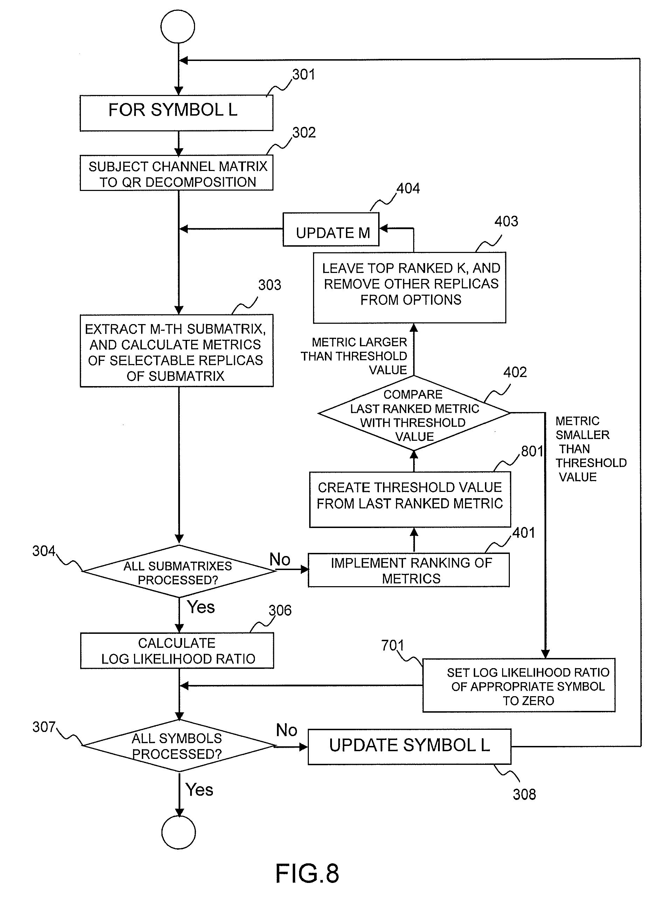

FIG. 8 is a flowchart in a case having one unit for determining a threshold value according to the second embodiment. A difference between FIGS. 7 and 8 resides in Step 801, and the other steps having the same reference symbols are identical with each other.

As in the first embodiment, in the second embodiment, as a method of creating the threshold value, the last ranked metrics are averaged as illustrated in Step 801 of FIG. 8, and the average value is multiplied by a coefficient to create the threshold value.

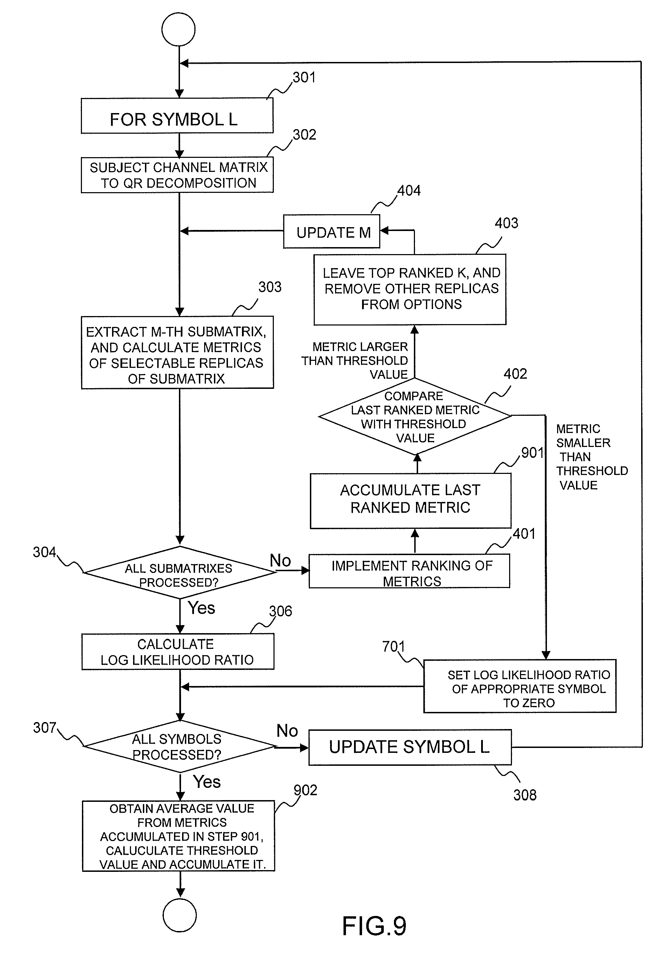

Also, FIG. 9 is a flowchart in a case having another unit for determining the threshold value according to the second embodiment. Differences between FIGS. 7 and 9 reside in Steps 901 and 902 and the other steps having the same reference symbols are identical with each other. With the use of mechanisms of Steps 901 and 902 in FIG. 9, the threshold value can be calculated on the basis of statistic of the past calculation results of not only the latest symbol but also a symbol before one subframe. In step 901, the last ranked metric is accumulated in a memory or the like. In step 902, after the processing for all of the symbols has been completed, the metric accumulated in Step 901 is read, the average operation is conducted, and the average operation is multiplied by the coefficient to calculate the threshold value. The obtained threshold value is accumulated in the memory or the like for the purpose of using the threshold value for comparison in Step 402.

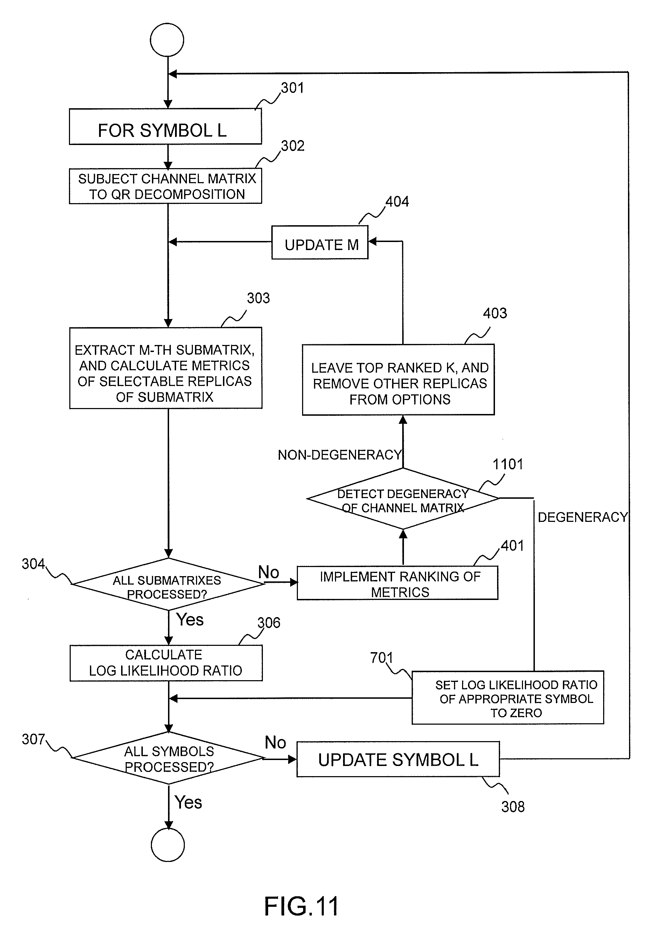

Also, FIG. 11 is a flowchart in a case having a unit for determining a branch under another condition according to the second embodiment. In Step 402 of FIG. 7, the last ranked metric as a reference is compared with the threshold value. However, the present invention is not limited to this. A difference between FIGS. 7 and 11 resides in Step 1101, and the other steps having the same reference symbols are identical with each other. For example, as in Step 1101 of FIG. 11, it may be determined whether degeneracy or non-degeneracy by determination of the degeneracy of the channel matrix. With this function, the symbol in which an error propagation conceivably occurs can be accurately determined as in FIG. 7, and therefore the performance is improved as compared with the conventional QR decomposition-MLD. Hence, the problem can be solved. The determination of the degeneracy is conducted as described in FIG. 10.

Industrial Applicability

According to the present invention, particularly in a cellular communication based on an OFDMA, the performance of the QR decomposition-MLD can be improved. An increase in throughput required at this time can be suppressed to be small.

**Claims**

1. An MIMO receiving method employing a QR decomposition-MLD, the method comprising:

   a step 1 of subjecting a channel matrix of N x N, which is obtained from N (N is an integer of two or more) or more antennas, to QR decomposition to provide an upper triangular matrix for each symbol of a received signal;
   a step 2 of extracting an M-th submatrix of the obtained channel matrix after the QR decomposition with an initial value of M as N, and calculating candidate metrics of selectable replicas for the submatrix;
   a step 3 of ranking the metrics calculated in the step 2 in an increasing order;
   a step 4 of removing predetermined K-th and subsequent replicas having lower evaluation in the ranking from the candidates of the subsequent submatrixes when the largest metric obtained in the ranking of the step 3 is larger than a predetermined specific threshold value;

a step 5 of decrementing M by 1, and repeating the step 2, the step 3, and the step 4 until M=1; and

a step 6 of bypassing the step 4 and shifting to the step 5 without selecting the candidate of the replica when the largest metric obtained in the ranking of the step 3 is smaller than the predetermined specific threshold value.

2. The MIMO receiving method according to claim 1, wherein an average value of the largest metrics obtained in the step 3 is obtained, and a value obtained by multiplying the average value by a predetermined coefficient is set as the specific threshold value.

3. The MIMO receiving method according to claim 2, wherein the average value or the threshold value calculated previously is accumulated in an accumulator, and the accumulated value is used as the specific threshold value.

4. An MIMO receiving method employing a QR decomposition-MLD, the method comprising:

a step 1 of subjecting a channel matrix of N x N, which is obtained from N (N is an integer of two or more) or more antennas, to QR decomposition to provide an upper triangular matrix for each symbol of a received signal;

a step 2 of extracting an M-th submatrix of the obtained channel matrix after the QR decomposition with an initial value of M as N, and calculating candidate metrics of selectable replicas for the submatrix;

a step 3 of ranking the metrics calculated in the step 2 in an increasing order;

a step 4 of removing predetermined K-th and subsequent replicas having lower evaluation in the ranking from the candidates of the subsequent submatrixes when the largest metric obtained in the ranking of the step 3 is larger than a predetermined specific threshold value;

a step 5 of decrementing M by 1, and repeating the step 2, the step 3, and the step 4 until M=1; and

a step 6 of setting a log likelihood ratio of an appropriate symbol to zero when the largest metric obtained in the ranking of the step 3 is smaller than the predetermined specific threshold value.

5. The MIMO receiving method according to claim 4, wherein an average value of the largest metrics obtained in the step 3 is obtained, and a value obtained by multiplying the average value by a predetermined coefficient is set as the specific threshold value.

6. The MIMO receiving method according to claim 5, wherein the average value or the threshold value calculated previously is accumulated in an accumulator, and the accumulated value is used as the specific threshold value.

7. An MIMO receiving method employing a QR decomposition-MLD, the method comprising:

a step 1 of subjecting a channel matrix of N x N, which is obtained from N (N is an integer of two or more) or more antennas, to QR decomposition to provide an upper triangular matrix for each symbol of a received signal;

a step 2 of extracting an M-th submatrix of the obtained channel matrix after the QR decomposition with an initial value of M as N, and calculating candidate metrics of selectable replicas for the submatrix;

a step 3 of ranking the metrics calculated in the step 2 in an increasing order;

a step 4 of detecting degeneracy from the channel matrix of an appropriate symbol, and removing predetermined K-th and subsequent replicas having lower evaluation in the ranking from the candidates of the subsequent submatrixes when the degeneracy is not detected;

a step 5 of decrementing M by 1, and repeating the step 2, the step 3, and the step 4 until M=1; and

a step 6 of detecting degeneracy from the channel matrix of the appropriate symbol, bypassing the step 4 and shifting to the step 5 without selecting the candidate of the replica when the degeneracy is detected.

8. An MIMO receiving method employing a QR decomposition-MLD, the method comprising:

a step 1 of subjecting a channel matrix of N x N, which is obtained from N (N is an integer of two or more) or more antennas, to QR decomposition to provide an upper triangular matrix for each symbol of a received signal;

a step 2 of extracting an M-th submatrix of the obtained channel matrix after the QR decomposition with an initial value of M as N, and calculating candidate metrics of selectable replicas for the submatrix;

a step 3 of ranking the metrics calculated in the step 2 in an increasing order;

a step 4 of detecting degeneracy from the channel matrix of an appropriate symbol, and removing predetermined K-th and subsequent replicas having lower evaluation in the ranking from the candidates of the subsequent submatrixes when the degeneracy is not detected;

a step 5 of decrementing M by 1, and repeating the step 2, the step 3, and the step 4 until M=1; and

a step 6 of detecting degeneracy from the channel matrix of the appropriate symbol, and setting a log likelihood ratio of the appropriate symbol to zero when the degeneracy is detected.

FIG.1

FIG.2

FIG.3

FOR SYMBOL L — 301

SUBJECT CHANNEL MATRIX TO QR DECOMPOSITION — 302

400

UPDATE M — 404

EXTRACT M-TH SUBMATRIX, AND CALCULATE METRICS OF SELECTABLE REPLICAS OF SUBMATRIX — 303

LEAVE TOP RANKED K, AND REMOVE OTHER REPLICAS FROM OPTIONS — 403

METRIC LARGER THAN THRESHOLD VALUE

METRIC SMALLER THAN THRESHOLD VALUE

COMPARE LAST RANKED METRIC WITH THRESHOLD VALUE — 402

ALL SUBMATRIXES PROCESSED? — 304

No

IMPLEMENT RANKING OF METRICS — 401

Yes

CALCULATE LOG LIKELIHOOD RATIO — 306

ALL SYMBOLS PROCESSED? — 307

No

UPDATE SYMBOL L — 308

Yes

FIG.4

FOR SYMBOL L — 301

SUBJECT CHANNEL MATRIX TO QR DECOMPOSITION — 302

UPDATE M — 404

LEAVE TOP RANKED K, AND REMOVE OTHER REPLICAS FROM OPTIONS — 403

EXTRACT M-TH SUBMATRIX, AND CALCULATE METRICS OF SELECTABLE REPLICAS OF SUBMATRIX — 303

METRIC LARGER THAN THRESHOLD VALUE

METRIC SMALLER THAN THRESHOLD VALUE

COMPARE LAST RANKED METRIC WITH THRESHOLD VALUE — 402

CREATE THRESHOLD VALUE FROM LAST RANKED METRIC — 501

304 — ALL SUBMATRIXES PROCESSED?

No — IMPLEMENT RANKING OF METRICS — 401

Yes

CALCULATE LOG LIKELIHOOD RATIO — 306

307 — ALL SYMBOLS PROCESSED?

No — UPDATE SYMBOL L — 308

Yes

FIG.5

FOR SYMBOL L    *301*

SUBJECT CHANNEL MATRIX
TO QR DECOMPOSITION    *302*

UPDATE M    *404*

LEAVE TOP RANKED K, AND
REMOVE OTHER REPLICAS
FROM OPTIONS    *403*

EXTRACT M-TH SUBMATRIX,
AND CALCULATE METRICS
OF SELECTABLE REPLICAS
OF SUBMATRIX    *303*

METRIC LARGER
THAN THRESHOLD
VALUE

METRIC
SMALLER
THAN
THRESHOLD
VALUE

COMPARE
LAST RANKED METRIC
WITH THRESHOLD
VALUE    *402*

ACCUMULATE LAST
RANKED METRIC    *601*

ALL SUBMATRIXES
PROCESSED?    *304*

No    IMPLEMENT RANKING OF
METRICS    *401*

Yes    CALCULATE
LOG LIKELIHOOD RATIO    *306*

ALL SYMBOLS
PROCESSED?    *307*

No    UPDATE SYMBOL L    *308*

Yes    OBTAIN AVERAGE VALUE
FROM METRICS
ACCUMULATED IN STEP 601,
CALUCULATE THRESHOLD
VALUE AND ACCUMULATE IT.    *602*

FIG.6

25

FIG.7

FOR SYMBOL L — 301

SUBJECT CHANNEL MATRIX TO QR DECOMPOSITION — 302

UPDATE M — 404

LEAVE TOP RANKED K, AND REMOVE OTHER REPLICAS FROM OPTIONS — 403

EXTRACT M-TH SUBMATRIX, AND CALCULATE METRICS OF SELECTABLE REPLICAS OF SUBMATRIX — 303

METRIC LARGER THAN THRESHOLD VALUE

COMPARE LAST RANKED METRIC WITH THRESHOLD VALUE — 402

METRIC SMALLER THAN THRESHOLD VALUE

CREATE THRESHOLD VALUE FROM LAST RANKED METRIC — 801

ALL SUBMATRIXES PROCESSED? — 304 No → IMPLEMENT RANKING OF METRICS — 401

Yes

CALCULATE LOG LIKELIHOOD RATIO — 306

SET LOG LIKELIHOOD RATIO OF APPROPRIATE SYMBOL TO ZERO — 701

ALL SYMBOLS PROCESSED? — 307 No → UPDATE SYMBOL L — 308

Yes

FIG.8

FOR SYMBOL L _301_

SUBJECT CHANNEL MATRIX
TO QR DECOMPOSITION _302_

UPDATE M _404_

LEAVE TOP RANKED K, AND
REMOVE OTHER REPLICAS
FROM OPTIONS _403_

EXTRACT M-TH SUBMATRIX,
AND CALCULATE METRICS
OF SELECTABLE REPLICAS
OF SUBMATRIX _303_

METRIC LARGER
THAN THRESHOLD
VALUE

COMPARE
LAST RANKED METRIC
WITH THRESHOLD
VALUE _402_

METRIC
SMALLER
THAN
THRESHOLD
VALUE

ACCUMULATE LAST
RANKED METRIC _901_

_304_ ALL SUBMATRIXES
PROCESSED?

No → IMPLEMENT RANKING OF
METRICS _401_

Yes

CALCULATE
LOG LIKELIHOOD RATIO _306_

_701_ SET LOG LIKELIHOOD RATIO
OF APPROPRIATE SYMBOL
TO ZERO

_307_ ALL SYMBOLS
PROCESSED?

No → UPDATE SYMBOL L _308_

Yes

OBTAIN AVERAGE VALUE
FROM METRICS
ACCUMULATED IN STEP 901,
CALUCULATE THRESHOLD
VALUE AND ACCUMULATE IT. _902_

FIG.9

28

FOR SYMBOL L — 301

SUBJECT CHANNEL MATRIX TO QR DECOMPOSITION — 302

UPDATE M — 404

EXTRACT M-TH SUBMATRIX, AND CALCULATE METRICS OF SELECTABLE REPLICAS OF SUBMATRIX — 303

LEAVE TOP RANKED K, AND REMOVE OTHER REPLICAS FROM OPTIONS — 403

NON-DEGENERACY

DETECT DEGENERACY OF CHANNEL MATRIX — 1001

DEGENERACY

ALL SUBMATRIXES PROCESSED? — 304

No

IMPLEMENT RANKING OF METRICS — 401

Yes

CALCULATE LOG LIKELIHOOD RATIO — 306

ALL SYMBOLS PROCESSED? — 307

No

UPDATE SYMBOL L — 308

Yes

FIG.10

```
        ( )
         │
         ▼                    ┌─── 301
   ┌─────────────┐
   │ FOR SYMBOL L │
   └─────────────┘
         │                    ┌─── 302
         ▼
   ┌──────────────────────┐
   │ SUBJECT CHANNEL MATRIX │
   │  TO QR DECOMPOSITION   │
   └──────────────────────┘
         │                         ┌─── 404
         ▼          ┌─────────────┐
         ◄──────────│  UPDATE M   │◄─────┐
                    └─────────────┘      │
         │                               │
         │      ┌─── 303                 │
         ▼                               │     ┌─── 403
   ┌──────────────────────┐      ┌──────────────────────┐
   │ EXTRACT M-TH SUBMATRIX,│     │ LEAVE TOP RANKED K, AND │
   │ AND CALCULATE METRICS  │     │ REMOVE OTHER REPLICAS   │
   │ OF SELECTABLE REPLICAS │     │    FROM OPTIONS         │
   │    OF SUBMATRIX        │     └──────────────────────┘
   └──────────────────────┘              ▲
                                NON-DEGENERACY
                                         │
                               ┌────────────────────┐   ┌─── 1101
                               │  DETECT DEGENERACY  │
                               │  OF CHANNEL MATRIX  │──── DEGENERACY
                               └────────────────────┘
         │                               ▲
  304 ── │                      ┌──────────────────┐  ┌─── 401
         ▼            No         │ IMPLEMENT RANKING OF │
   ┌────────────┐ ──────────────►│     METRICS          │
   │ ALL SUBMATRIXES│            └──────────────────┘
   │  PROCESSED?    │
   └────────────┘
         │ Yes        ┌─── 306
         ▼
   ┌──────────────┐
   │  CALCULATE    │           ┌─── 701
   │ LOG LIKELIHOOD RATIO │                ┌──────────────────────┐
   └──────────────┘                        │ SET LOG LIKELIHOOD RATIO │
         │            ◄───────────────────│ OF APPROPRIATE SYMBOL   │
         │                                 │      TO ZERO            │
  307 ── │                                 └──────────────────────┘
         ▼            No
   ┌────────────┐ ──────────► ┌──────────────┐
   │ ALL SYMBOLS │            │ UPDATE SYMBOL L │
   │  PROCESSED? │            └──────────────┘
   └────────────┘                    └─── 308
         │ Yes
         ▼
        ( )
```

FIG.11

FIG.12

FIG.13

FIG.14

FIG.15

FIG.16

FIG.17

FIG.18

FIG.19

FIG. 20

FIG.21

FIG. 22

FIG.23

FIG.24

FIG. 25

FIG. 26

FIG.27

FIG.28

## INTERNATIONAL SEARCH REPORT

| International application No. |
| --- |
| PCT/JP2009/054796 |

A. CLASSIFICATION OF SUBJECT MATTER
*H04J99/00*(2009.01)i, *H04B7/04*(2006.01)i

According to International Patent Classification (IPC) or to both national classification and IPC

B. FIELDS SEARCHED

Minimum documentation searched (classification system followed by classification symbols)
H04J99/00, H04B7/04

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | Katsunari HONJO, Tomoaki OTSUKI, "MIMO System ni Okeru MMSE/OSD o Heiyo shita Tei Enzanryo MLD Shingo Kenshutsuho", IEICE Technical Report, 14 May, 2004 (14.05.04), Vol.104, No.63, pages 25 to 30 | 1-3<br>4-8 |
| Y<br>A | Hiroyuki KAWAI, Ken'ichi HIGUCHI, Mamoru SAWAHASHI, Takumi ITO, Yoshikazu SHIKAKURA, Akihisa USHIROKAWA, Hiroyuki SEKI, "OFCDM MIMO Taju ni Okeru Pilot Channel Suitei · Ranking o Mochiiru Symbol Replica Koho Sakujogata QR Bunkai -MLD no Kosei", IEICE Technical Report, 25 February, 2004 (25.02.04), Vol.103, No.680, pages 55 to 60 | 1-3<br>4-8 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>  26 May, 2009 (26.05.09) | Date of mailing of the international search report<br>  02 June, 2009 (02.06.09) |
| --- | --- |
| Name and mailing address of the ISA/<br>  Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/054796 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Noriyuki MAEDA, Ken'ichi HIGUCHI, Hiroyuki KAWAI, Mamoru SAWAHASHI, "OFDM MIMO Taju ni Okeru Shinraido Joho ni Motozuku Tekio Ikinokori Symbol Replica Koho Sentaku o Tekiyo shita Sphere decoding-ho", IEICE Technical Report, 11 November, 2004 (11.11.04), Vol.104, No.439, pages 67 to 72 | 1-8 |
| A | JP 2006-222872 A (Nippon Telegraph And Telephone Corp.), 24 August, 2006 (24.08.06), Full text; all drawings (Family: none) | 1-8 |

Form PCT/ISA/210 (continuation of second sheet) (April 2007)

**INTERNATIONAL SEARCH REPORT**

International application No.

PCT/JP2009/054796

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
   The inventions of claims 1-3, 7 relate to a MIMO reception method employing the QR decomposition-MLD which selects no replica candidate when a particular condition is detected (the largest metric obtained in the ranking is smaller than a predetermined particular threshold value or degeneracy is detected from the channel matrix of the symbol).
   The inventions of claims 4-6, 8 relates to a MIMO reception method employing the QR decomposition-MLD which makes the logarithm likelihood ratio of the symbol to be zero if the aforementioned particular condition is detected.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)